## Europäisches Patentamt

## European Patent Office

## Office européen des brevets

(11) Publication number: **0 591 531 A1**

# EUROPEAN PATENT APPLICATION
## published in accordance with Art. 158(3) EPC

(21) Application number: 92907980.4

(22) Date of filing: **03.04.92**

(86) International application number:
**PCT/JP92/00416**

(87) International publication number:
**WO 93/19935 (14.10.93 93/25)**

(51) Int. Cl.⁵: **B32B 15/08**

(43) Date of publication of application:
**13.04.94 Bulletin 94/15**

(84) Designated Contracting States:
**DE FR GB IT**

(71) Applicant: **NIPPON CARBIDE KOGYO KABUSHIKI KAISHA**
**3-1, Marunouchi 3-chome**
**Chiyoda-ku**
**Tokyo 100(JP)**

(72) Inventor: **SAHARA, Masao**
**21-402, 5-1, Kounandai,**
**Kounan-ku**
**Yokohama-shi, Kanagawa 233(JP)**
Inventor: **MIMURA, Ikuo**
**571-1, Aoshima**
**Uozu-shi, Toyama 937(JP)**
Inventor: **HABASAKI, Yasuharu**
**391, Yamadashin**
**Kurobe-shi, Toyama 938(JP)**

Inventor: **HOUJO, Norihisa**
**70, Iwase Hakusan-cho**
**Toyama-shi, Toyama 931(JP)**
Inventor: **ISHIDA, Susumu**
**487-25, Shimoumezawa**
**Namerikawa-shi, Toyama 936(JP)**
Inventor: **EBATA, Norimitsu**
**597, Tonomachi,**
**Asahi-machi**
**Shimoshinkawa-gun, Toyama 938-01(JP)**
Inventor: **MURAMOTO, Tadanori**
**3546, Ogio**
**Kurobe-shi, Toyama 938(JP)**
Inventor: **OOSAKI, Naotake**
**469, Motoshin**
**Uozu-shi, Toyama 937(JP)**

(74) Representative: **Patentanwälte Grünecker, Kinkeldey, Stockmair & Partner**
**Maximilianstrasse 58**
**D-80538 München (DE)**

(54) **FLUORORESIN LAMINATED METAL AND METHOD OF MANUFACTURING SAID METAL.**

(57) A fluororesin laminated metal coated with colored fluorine group resin films containing colorant and heat-bonded to the metal surface, which is obtained through the process that, when laminating said colored fluororesin films on the metal surface, at least either said films or the metal are heated to be bonded to each other under pressure and a fluororesin laminated metal thus obtained is heated once more. In a fluororesin laminated metal, a printing layer composed of inking resin composition is formed on the surface of a fluororesin film or of said metal, said film is heat-bonded to the metal surface, and an inking resin composition in said printing layer is constituted of any of fluororesin and imide group resin. In a resin-laminated metal or worked metal in which the surface of aluminum or aluminum alloy is partly coated with fluororesin layer, at least an edge surface of non-resin-laminated part of said metal cut when worked is coated with an anodic oxidation film or chemical oxidation film.

Rank Xerox (UK) Business Services
(3.10/3.09/3.3.4)

# F i g . 1

Technical Field

The prevent invention relates to a resin-coated metal produced by fusing a film of a fluororesin (or a fluorine-containing resin) onto the surface of a metal.

Background

It has already been known that excellent properties inherent in a fluororesin, for example, high resistances to heat and chemicals and excellent electrical and mechanical characteristics can be imparted to a sheet of a metal such as aluminum by forming a fluororesin layer on the surface of the sheet. Further, the inventors of the present invention have already proposed various coated metals produced by hot-pressing fluororesin films onto metal sheets in, e.g., Japanese Patent Application Nos. 73899/1989, 139155/1989, 262211/1989 and 126572/1990.

Meanwhile, there is still a great demand for metals coated with a colored fluororesin. Although the inventors of the present invention made attempts to coat metal sheets with a fluororesin containing a large amount of a colorant by the process of the prior art, the resulting coated metal sheets were poor in the bond strength between the fluororesin film and the sheet to result in delamination in long-term use.

There was another problem that it was very difficult to print decorative or display characters and/or figures in color on the surface of a fluororesin film formed on a metal sheet. The inventors of the present invention have solved this problem by forming a print layer on the surface of a fluororesin film or a metal sheet prior to the bonding of the film to the sheet. However, they have also found that this means has another problem that in fusing the film onto the sheet, the print layer is liable to be discolored or the ink composition of the print layer is liable to be molten.

Further, when aluminum or an aluminum-base alloy was coated with a fluororesin, the resulting laminate had a disadvantage that water penetrated an uncoated surface of the laminate, particularly, the cut area formed in working or the back to attack the metal, lowering the weathering resistance and corrosion resistance, though the fluororesin-coated surface of the laminate was excellent in weathering resistance, corrosion resistance and so on.

Accordingly, the first object of the present invention is to provide a metal coated with a colored fluororesin, which is characterized in that the resin layer does not peel off the metal even in long-term use, and a process for the production thereof.

Further, the second object of the present invention is to provide a fluororesin-coated metal having a desired print layer of characters and/or figures, which is characterized in that the print layer is one which is tough, hardly peels off and is present on the surface of the metal in a state not affected adversely by fusing the resin film onto the metal.

Furthermore, the third object of the present invention is to provide a fluororesin-coated aluminum or aluminum-base alloy which is excellent in weathering resistance, corrosion resistance, Taber's abrasion resistance and bendability.

Disclosure of Invention

The present invention provides a fluororesin-coated metal comprising a metal sheet and a fluororesin layer formed on the metal sheet, wherein the fluororesin layer is one formed by fusing a colored fluororesin film containing a colorant onto the surface of the metal sheet, thereby attaining the above first object.

It is preferable that the above fluororesin have a melting point of 200 °C or above and the content of the colorant in the fluororesin be 0.001 to 25 PHR.

It is preferable that the fluororesin be a tetrafluoroethylene resin.

It is preferable that the fluororesin be a trifluoroethylene resin.

It is preferable that the fluororesin be a difluoroethylene resin.

It is preferable that the above tetrafluoroethylene resin be an ethylene-tetrafluoroethylene copolymer resin (ETFE).

It is preferable that the above colorant be a bright-color pigment, which is contained in the fluororesin either in a state coated with a silicone resin or together with it.

It is preferable that the colorant be zinc white (ZnO), titanium oxide ($TiO_2$), lithopone (ZnS + $BaSO_4$), zinc sulfide (ZnS), cadmium red (CdS + CdSe), antimony red ($2Sb_2S_3 \cdot Sb_2O_3$), Irgazin red, perylene red, iron oxide [$Fe_2O_3$ + (FeO)], chrome vermilion ($PbCrO_4 \cdot PbMoO_4 \cdot PbSO_4$), amber ($Fe_2O_3$ + $MnO_2$ + $Mn_3O_4$), chrome yellow ($PbCrO_4$), zinc yellow ($ZnCrO_4$), barium chromate ($BaCrO_4$), cadmium yellow (CdS), titanium yellow ($TiO_2 \cdot NiO \cdot Sb_2O_3$), ocher ($Fe_2O_3 \cdot SiO_2 \cdot Al_2O_3$), phthalocyanine, chrome green (iron

EP 0 591 531 A1

blue + chrome yellow), cobalt green (CoO•ZnO•MgO), cerulean blue (CoO•nSnO$_2$•mMgO), ultramarine blue (3NaAl•SiO$_4$•Na$_2$S$_2$), iron blue [Fe$_4$[Fe(CN)$_6$]$_3$•nH$_2$O], cobalt blue (CoO-nAl$_2$O$_3$), copper phthalocyanine blue, cobalt violet [CO$_3$(PO$_4$)$_2$],dioxazine violet, carbon black, iron black aniline black or cyanine black.

The above metal may be an iron family metal.

It is preferable that the above metal be aluminum or an aluminum-base alloy.

It is preferable that the non-fluororesin-coated surface of the above metal, at least the cut area formed in working be covered with an oxide layer formed thereon by anodic or chemical oxidation.

The present invention provides a process for the production of a fluororesin-coated metal which comprises laminating a metal sheet with a colored fluororesin film containing a colorant, characterized by heating at least either of the film and the metal sheet, press-bonding them to each other and reheating the obtained laminate, thereby attaining the above first object.

It is preferable that the reheating of the laminate be conducted at a temperature ranging from the melting point (mp) of the fluororesin to the thermal decomposition temperature thereof (both inclusive).

Further, the present invention provides a fluororesin-coated metal comprising a metal sheet, a fluororesin layer formed on the sheet and a print layer composed of an ink composition, which is produced by forming a print layer on the surface of a fluororesin film or a metal sheet with an ink composition and fusing the resulting film and sheet onto each other and which is characterized in that the ink composition comprises at least one member selected from among fluororesins and imide resins, thereby attaining the above second object.

It is preferable that the fluororesin constituting the ink composition be one mainly comprising a carboxylated fluororesin.

It is preferable that the above carboxylated fluororesin be one comprising a carboxylated vinyl ether as a constituent monomer.

It is preferable that the pigment constituting the ink composition be a bright-color one, which is contained in the fluororesin or imide resin either in a state coated with a silicone resin or together with it.

It is preferable that the print layer lie between the fluororesin film and the metal sheet.

It is preferable that the melt flow index of the above ink composition be 1 to 500.

It is preferable that the melt flow index of the fluororesin film be 10 to 500 mm$^3$/sec.

It is preferable that the above metal be aluminum or an aluminum-base alloy.

It is preferable that the non-fluororesin-coated surface of the above metal, particularly at least the cut area thereof formed in working be covered with an oxide layer formed thereon by anodic or chemical oxidation.

The fluororesin-coated metal of the present invention may be produced by roughening the surface of an aluminum metal into a rough surface having a center-line-average height (Ra) of 0.5 to 30.0 μm and a ten-point-average height (Rz) of 1.0 to 100 μm, forming a print layer on the roughened surface, and fusing a fluororesin film onto the resulting metal.

Furthermore, the present invention provides a fluororesin-coated metal which is an aluminum or aluminum-base alloy sheet partially coated with a fluororesin or a work thereof, characterized in that the non-fluororesin-coated surface of the metal, at least the cut area thereof formed in working is covered with an oxide layer formed thereon by anodic or chemical oxidation, thereby attaining the above third object.

It is preferable that the whole of the non-fluororesin-coated surface be covered with an oxide layer formed thereon by anodic or chemical oxidation.

It is preferable that the oxide layer be one formed by anodization using sulfuric acid.

It is preferable that the anodic oxide layer be a colored one.

It is preferable that the above fluororesin-coated surface of the metal be one produced by fusing a fluororesin film onto aluminum or an aluminum-base alloy.

It is preferable that the fluororesin film be one having a print layer.

It is preferable that the print layer lie between the fluororesin film and the surface of the metal.

It is preferable that the ink composition forming the print layer have a melt flow index of 1 to 500.

It is preferable that the ink composition forming the print layer mainly comprise a fluororesin composition.

It is preferable that the fluororesin layer be colored with a pigment or a dye.

It is preferable that the fluororesin layer be composed of an ethylene-tetrafluoroethylene copolymer resin (ETFE).

The above resin-coated metal is useful as a wall-forming structural material or member.

4

Brief Description of Drawings

Fig. 1 is an enlarged partial sectional view of the fluororesin-coated metal sheet having a print layer according to the present invention.

Fig. 2 is an enlarged partial sectional view of the fluororesin-coated metal sheet of the present invention wherein a print layer is present and the whole of the non-resin-coated surface is covered with an oxide layer.

Fig. 3 is an enlarged partial sectional view of the fluororesin-coated metal sheet produced in Example 7-5, wherein part of the non-resin-coated surface is covered with an oxide layer.

Fig. 4 is a partial sectional view illustrating Example 7-8.

Fig. 5 is an enlarged sectional view showing an embodiment of the fluororesin-coated aluminum according to the present invention.

Figs. 6 (a), (b) and (c) are each a chart showing the surface unevenness of aluminum suitable for the production of the fluororesin-coated aluminum according to the present invention.

Best Mode for Carrying Out the Invention

The fluororesin-coated metal according to the present invention is one produced by fusing a fluororesin film onto a metal, which will now be described in detail.

[Fluororesin (or fluorine-containing resin)]

The fluororesin is a thermoplastic resin comprising a monomer containing a fluorine atom in its molecule, specifically a fluoroolefinic resin comprising a monomer containing at least one fluorine atom in its molecule. More specifically, the fluororesin is a tetrafluoroethylene resin comprising a monomer containing four fluorine atoms in its molecule or a trifluoroethylene, difluoroethylene or monofluoroethylene resin. Further, the fluororesin may be a copolymer comprising two or more of these fluoroethylene monomers or a copolymer comprising the above fluoroethylene monomer and one or more olefinic or halogenous monomers. Furthermore, a blend of two or more of these resins may be used. It is preferable that the fluororesin have a melting point ranging from 180 to 380°C. When the melting point of the fluororesin is below this range, the resulting coated metal will be poor in heat resistance, while when it is above this range, the colorant will be thermally discolored.

[Metallic material]

The metal to be used in the present invention is not particularly limited, but may be any metal sheet. General examples of the metal include sheets of irony, aluminum, coppery, titanium and nickel metals, among which irony, aluminum and coppery metal sheets are preferable. Particularly, irony and aluminum sheets are still preferable. The above irony sheet may be any one so far as it contains iron as the main component. Specific examples of the irony sheet include cold rolled steel sheet, galvanized sheet iron, zinc alloy coated steel sheet, aluminum coated steel sheet, copper-coated steel sheet, stainless steel sheet, phosphated steel sheet and Al-Zn alloy coated steel sheet, among which galvanized sheet iron, zinc alloy-coated steel sheet, aluminum-coated steel sheet and Al-Zn alloy coated steel sheet are preferable.

Further, the above aluminum metal may be any one so far as it contains aluminum as the main component. General examples thereof include metals described in "Aluminum Handbook (2nd edition)" pp. 13 to 22 [published by Japan Light Metal Association, Sept. 30, 1982]. Specific examples thereof include pure aluminum, and Al-Cu, Al-Mn, Al-Si, Al-Mg, Al-Mg-Si and Al-Zn-Mg metals, among which pure aluminum and Al-Mn and Al-Mg metals are preferable. As described above, various aluminum metals can ba used. Particularly, it is preferable to use pure aluminum, an aluminum alloy such as duralumin or an aluminum metal containing a small amount of manganese or magnesium. Further, irony, coppery and titanium metals can favorably be used.

The above coppery metal may be any one so far as it contains copper as the main component. General examples thereof include pure copper, brass and bronze.

The thickness of the metal sheet according to the present invention is generally 0.15 to 5 mm, preferably 0.2 to 4 mm, though it is not particularly limited.

It is generally preferable for improving the bond strength between the metal and the fluororesin film that the metal be preliminarily subjected to surface treatment such as cleaning (degreasing) or surface roughening (sand blasting, chemical etching or the like).

(1) Embodiment of the metal coated with colored fluororesin

The metal coated with a colored fluororesin according to the present invention is one produced by fusing a colored fluororesin film onto the surface of a metal. The colored fluororesin film is prepared by molding a fluororesin composition containing a colorant into a film.

Although the fluororesin may be any one selected from among those described above, it is preferable that the fluororesin be a tetrafluoroethylene, difluoroethylene or trifluoroethylene resin, still preferably a tetrafluoroethylene resin.

Specific examples of the tetrafluoroethylene resin include polytetrafluoroethylene resin (PTFE), tetrafluoroethylene-perfluoroalkoxyethylene copolymer (PFA), tetrafluoroethylene-hexafluoropropylene-perfluoroalkoxyethylene copolymer (EPE), tetrafluoroethylene-hexafluoropropylene copolymer (FEP) and ethylenetetrafluoroethylene copolymer (ETFE), among which PFA, ETFE and EPE are preferable. Particularly, ETFE is still preferable.

More precisely, ETFE is a copolymer mainly comprising ethylene and tetrafluoroethylene (generally at a molar ratio of between 40 : 60 and 60 : 40), which may contain a small amount (generally at most 10%) of a third monomer. In the present invention, it is suitable to use a copolymer comprising ethylene and tetrafluoroethylene at a molar ratio of between 40 : 60 and 60 : 40, preferably between 45 : 55 and 55 : 45 and containing a perfluoroalkylvinyl monomer represented by the formula: $CH_2 = CH-C_nF_{2n+1}$ (wherein n is an integer of 2 to 10) in an amount of 0.1 to 10 mole %, preferably 0.3 to 5 mole %, while the perfluoroalkylvinyl monomer is, for example, $CH_2 = CH-C_4H_9$ or $CH_2 = CH-C_6H_{13}$.

ETFE has already been known in itself and can be prepared by, e.g., the process described in Japanese Patent Publication No. 50163/1984. Alternatively, one commercially available under the trade name of "Aflon R COP" (a product of Asahi Glass Co., Ltd.) may be used.

Specific examples of the trifluoroethylene resin include polychlorotrifloroethylene resin (PCTFE) and ethylene-chlorotrifluoroethylene copolymer (ECTFE), between which ECTFE is preferable. Specific examples of the difluoroethylene and monofluoroethylene resins include polyvinylidene fluoride resin (PVDF) and polyvinyl fluoride resin (PVF).

The thickness of the fluororesin film is generally 5 to 1500 $\mu$m, preferably 10 to 200 $\mu$m, particularly preferably 20 to 100 $\mu$m, though it is not particularly limited, but may be any one.

According to the present invention, a colorant is incorporated into the above fluororesin film. The colorant may be any of white, red, vermilion, yellow, green, blue, purple and black ones, though the colorant is not particularly limited. Specific examples of the white colorant include zinc white (ZnO), titanium oxide ($TiO_2$), lithopone ($ZnS + BaSO_4$) and zinc sulfide (ZnS); those of the red colorant include cadmium red ($CdS + CdSe$), antimony red ($2Sb_2S_3 \cdot Sb_2O_3$), Irgazin red and perylene red; those of the vermilion colorant include iron oxide [$Fe_2O_3 + (FeO)$], chrome vermilion ($PbCrO_4 \cdot PbMoO_4 \cdot PbSO_4$) and amber ($Fe_2O_3 + MnO_2 + Mn_3O_4$); those of the yellow colorant include chrome yellow ($PbCrO_4$), zinc yellow ($ZnCrO_4$), barium chromate ($BaCrO_4$), cadmium yellow (CdS), titanium yellow ($TiO_2 \cdot NiO \cdot Sb_2O_3$) and ocher ($Fe_2O_3 \cdot SiO_2 \cdot Al_2O_3$); those of the green colorant include phthalocyanine, chrome green (iron blue + chrome yellow), cobalt green ($CoO \cdot ZnO \cdot MgO$) and cerulean blue ($CoO \cdot nSnO_2 \cdot mMgO$); those of the blue colorant include ultramarine blue ($3NaAl \cdot SiO_4 \cdot Na_2S_2$), iron blue [$Fe_4[Fe(CN)_6]_3 \cdot nH_2O$], cobalt blue ($CoO \cdot nAl_2O_3$) and cyanine blue; those of the purple colorant include cobalt violet [$CO_3(PO_4)_2$] and dioxazine violet; and those of the black colorant include carbon black, iron black, aniline black and cyanine black.

Particularly preferable examples of the colorant are classified according to hue and given in Table 1A.

Table 1A

| Hue | Colorant | Chemical structure |
|---|---|---|
| white | titanium oxide<br>zinc white<br>lithopone<br>zinc sulfide | $TiO_2$<br>$ZnO$<br>$ZnS + BaSO_4$<br>$ZnS$ |
| red | cadmium red<br>antimony red<br>Irgazin red<br>perylene red | $CdS + CdSe + BsSO_4$<br>$2Sb_2S_3 \cdot Sb_2O_3$ |
| vermilion | chrome vermilion | $PbCrO_4 \cdot PbMoO_4 \cdot PbSO_4$ |
| brown | iron oxide<br>amber | $Fe_2O_3 + (FeO)$<br>$Fe_2O_3 + MnO_2 + Mn_3O_4$ |
| yellow | chrome yellow<br>zinc yellow<br>barium chromate<br>cadmium yellow<br>titanium yellow<br>ocher | $PbCrO_4$<br>$ZnCrO_4$<br>$BaCr_4$<br>$CdS$<br>$TiO_2 \cdot NiO \cdot Sb_2O_3$<br>$Fe_2O_3 \cdot SiO_2 \cdot Al_2O_3$ |
| green | chlorinated copper<br>phthalocyanine green<br>chrome green<br>cobalt green | <br><br>iron blue + chrome yellow<br>$CoO \cdot ZnO \cdot MgO$ |
| blue | phthalocyanine blue<br>cerulean blue<br>ultramarine blue<br>iron blue<br>cobalt blue<br>cyanine blue | <br>$CoO \cdot nSnO_2 \cdot mMgO$<br>$3NaAl \cdot SiO_2 \cdot Na_2S_2$<br>$Fe_4[Fe(CN)_6]_3 \cdot nH_2O$<br>$CoO \cdot nAl_2O_3$ |
| purple | cobalt violet<br>dioxazine violet | $Co_3(PO_4)_2$ |
| black | carbon<br>iron black<br>aniline black<br>cyanine black<br>titan black | $C$<br><br><br><br>$TiO$ |

The above colorant is generally added to the fluororesin in an amount of 0.001 to 50 PHR, preferably 0.01 to 30 PHR, still preferably 0.03 to 20 PHR, though the amount of the colorant to be added is not particularly limited.

When a bright-color pigment is used as the above colorant, it is essential that the pigment be used together with a silicone resin. The bright-color pigment is a pigment which have a high brightness and is liable to yellow, which may be any of organic and inorganic ones. Examples thereof include titanium oxide, titanium yellow and cobalt blue. When a fluororesin containing such a pigment is subjected to high-temperature treatment such as extrusion, the pigment tends to yellow to fail in producing a pastel-colored film.

The above problematic yellowing can be prevented by mixing the pigment with a silicone resin homogeneously or coating the pigment with a silicone resin. Further, the bright-color pigment coated with a silicone resin may be heated to cure the resin, and thereafter pulverized at need. The silicone resin may be any one having a polysiloxane structure, preferably one having a phenyl or methyl group, still preferably one having a dimethylsiloxane structure. Specific examples of the silicone resin include polydimethylsiloxane, polymethylphenylsiloxane and polydiphenylsiloxane resins; and resins prepared by modifying these

EP 0 591 531 A1

resins with epoxy, amine, fluorine-modified polyester resin, polyether, carboxyl, alkyl and alcohol. It is preferable that the silicone resin be one which is insolubilized against any solvent by heating and does not suffer from yellowing. The silicone resin is used in an amount of 0.1 to 10 parts by weight, preferably 1 to 5 parts by weight per 100 parts by weight of the colorant.

The metal to be used in the production of the metal coated with a colored fluororesin according to the present invention may be any one selected from among the metals described above. When the fluororesin-coated metal is used as a decorative building material, it is particularly preferable to use aluminum or an aluminum-base alloy which is a lightweight metal. When such an aluminum metal is used as the metal, it is desirable that the non-fluororesin-coated surface of the metal, i.e., the surface at which the aluminum metal itself appears be covered with an oxide layer formed thereon by anodic or chemical oxidation. It is particularly desirable that the cut area of the coated metal formed in working be covered with an oxide layer formed thereon by anodic or chemical oxidation.

Next, the process for the producing the metal coated with a colored fluororesin according to the present invention will be described. The process of the present invention is one which comprises laminating a metal sheet with a colored fluororesin film containing a colorant, characterized by heating at least either of the film and the metal sheet, press-bonding the resulting film and sheet to each other and reheating the obtained laminate. It is preferable that the reheating be conducted at a temperature ranging from the melting point (mp) of the fluororesin to the thermal decomposition temperature thereof (both inclusive). More specifically, the process comprises the pretreatment, heating, press-bonding, reheating and cooling steps. These steps will now be described.

(A) Pretreatment step

This step is conducted at need for bonding a fluororesin film to a metal sheet more firmly.

① Pretreatment of metal sheet

The metal sheet to be used in this embodiment is pretreated at need for the purpose of removing oil, foreign substances, oxide layer and so forth from the surface of the sheet to clean the sheet, polishing the sheet to make the metal itself appear at the surface, applying surface treatment such as plating or acid treatment or roughening the surface of the sheet.

(a) surface cleaning

The precess for the surface cleaning is not particularly limited, but the surface cleaning may be conducted by any conventional means for metals. For example, the metal can be degreased and cleaned with an organic solvent, an aqueous alkaline solution and/or a surfactant.

(b) surface polishing

The metal sheet is mechanically or chemically polished to make the metal itself appear at the surface.

(c) surface treatment

The surface to be covered with a fluororesin film may be subjected to plating, formation of an oxide layer and/or chemical treatment such as rustproofing, if necessary. Specific examples of the chemical treatment of an irony metal include phosphating with zinc phosphate or calcium phosphate and chromating with a reactive type chromate or a coating type chromate.

(d) surface roughening

The surface of the metal sheet may be roughened by a mechanical means such as brushing, sand blasting or shot blasting, chemical or electrochemical etching, or a combination of two or more of them.

② Pretreatment of film

The fluororesin film to be applied to a metal may be subjected to various pretreatments such as removal of oil and foreign substance from the surface of the film, formation of an oxide film by corona discharge or chemical treatment and/or application of various surface treatments such as aminosilane, vinylsilane and mercaptosilane.

(B) Heating step

The pretreated metal sheet is heated in the open air or in an atmosphere substantially free from oxygen. If necessary, the film may also be heated.

① Heating atmosphere

The above term "atmosphere substantially free from oxygen" specifically refers to an atmosphere having an oxygen content of 1% or below, desirably 0.5% or below, more desirably 0.2% or below, most desirably 0.01% or below, though the atmosphere is not particularly limited, but may be any one so far as it permits the heating of the pretreated metal and film substantially without any change on the surface state thereof. Particularly, the heating may be conducted in an atmosphere filled with an inert gas or in a vacuum. The inert gas is generally preferably nitrogen or argon, though it is not particularly limited.

The degree of the above vacuum is 5 Torr or below, preferably 1 Torr or below, still preferably 0.1 Torr or below.

② Heating temperature

The temperature to which the metal sheet and the film should be heated varies depending upon the kinds of the sheet and film and therefore may be suitably selected. Generally, the temperature ranges from the melting (softening) point (mp) of the fluororesin film, preferably the mp plus 30(°C), still preferably the mp plus 50(°C), to the thermal decomposition temperature thereof (both inclusive). Specifically, the temperature is generally 260 to 370°C, preferably 280 to 330°C with respect to an ETFE film, generally 280 to 400°C with respect to a PFA film, generally 180 to 350°C, preferably 210 to 290°C with respect to a PCTFE film, or 250 to 300°C with respect to a PVDF film.

③ Heating time

It is necessary that the heating time be enough to heat at least the surface of the metal sheet up to the above temperature. In practice, the heating time is suitably determined in consideration of the kind and thickness of the metal sheet. The heating time is generally about 1 to 20 minutes, preferably 3 to 15 minutes, still preferably 5 to 10 minutes.

(C) Press bonding step

In this step, a fluororesin film is laid on the heated metal sheet and press-bonded to the sheet.

① Atmosphere

Although the atmosphere of this step is not particularly limited, it is desirable that the film be laid on the heated metal sheet in an atmosphere substantially free from oxygen. It is preferable that the atmosphere be according to the one described in the above step (B)-①.

② Press bonding

The film and the heated metal sheet are firmly bonded to each other by continuous pressing with, e.g., a twin roll. It is preferable that the roll to come into contact with the film be one not adhering to the film, e.g., a rubber or metal roll. The pressing is conducted under a pressure loading of 5 to 30 kg/cm$^2$, preferably 10 to 20 kg/cm$^2$.

(D) Reheating step

In this step, the laminate prepared by the above press bonding is reheated to fuse the film onto the metal sheet more firmly.

① Heating atmosphere

The atmosphere for the reheating is not particularly limited. However, it is preferable that the reheating be conducted in an atmosphere according to the one described in the step (B)-①, though the reheating may also be conducted in the open air.

② Heating temperature

The temperature to which the laminate should be heated is suitably determined in consideration of the kinds of the film and the metal sheet. Generally, the temperature ranges from the melting (softening) point (mp) of the film, preferably the mp plus 20(°C), still preferably the mp plus 30(°C), to the thermal decomposition temperature thereof. Specifically, when the film does not contain the above colorant, the temperature is generally 260 to 370°C, preferably 280 to 330°C with respect to an ETFE film, generally 280 to 400°C with respect to a PFA film, generally 180 to 350°C, preferably 210 to 290°C with respect to a PCTFE, or 200 to 250°C with respect to a PVDF film.

When the film contains the above colorant, the reheating must be conducted at a temperature higher than the above one. The difference in temperature between the above case and this case varies depending upon the colorant to be added. For example, when the film contains an organic colorant, the temperature must be higher than the above one by 20 to 30°C, while when it contains an inorganic colorant, it must be higher than the above one by 20 to 50°C.

③ Heating time

It is necessary that the heating time be enough to heat at least the surface of the metal sheet to the above temperature, though the heating time is not particularly limited but may be suitably determined in consideration of the kind and thickness of the metal sheet. Specifically, when the fluororesin film does not contain any colorant, the heating time is generally 1 to 20 minutes, preferably 3 to 15 minutes, still preferably 5 to 10 minutes, while when the film contains a colorant, the heating time must be further prolonged by at least two minutes.

(E) Cooling step

In this step, the reheated laminate is cooled to room temperature with an air fan, water or the like. It is desirable that the laminate be uniformly cooled, because ununiform cooling is causative of distortion or deformation of the laminate.

(G) Other additional steps

In the preparation of the above fluororesin film, the above bright-color pigment may be surface-treated with a silicone resin prior to the addition thereof to a fluororesin. Alternatively, the bright-color pigment may be added together with a silicone resin in the preparation of the pellets of a fluororesin. The surface treatment of the bright-color pigment with a silicone resin may be conducted by dissolving polydimethylsiloxane in an organic solvent such as toluene to form a solution, dispersing a bright-color pigment such as titanium oxide in the solution, and freeing the resulting mixture from the solvent. The surface-coated pigment thus obtained is treated at a given temperature to insolubilize the surface treatment. Further, the resulting pigment may be pulverized at need.

(2) Embodiment of the fluororesin-coated metal having print layer

The fluororesin-coated metal sheet having a print layer according to the present invention is a fluororesin-coated metal comprising a metal sheet, a fluororesin layer formed on the sheet and a print layer composed of an ink composition, which is produced by forming a print layer on the surface of a fluororesin film or a metal sheet with an ink composition and fusing the resulting film and sheet onto each other and which is characterized in that the ink composition comprises at least one member selected from among fluororesins and imide resins as the base.

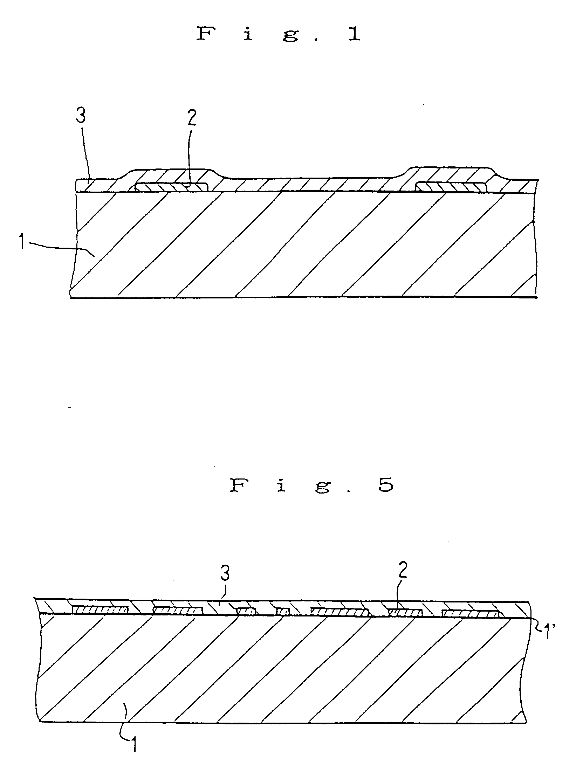

This embodiment of the present invention will now be described by referring to Fig. 1.

Fig. 1 is a schematic partial sectional view of an example of the resin-coated metal according to this embodiment, which is produced by fusing a fluororesin film having a print layer composed of an ink composition on its surface onto the surface of a metal.

As shown in Fig. 1, the resin-coated metal according to this embodiment comprises a metal 1, and a fluororesin films 3 which has a print layer 2 composed of an ink composition on its surface and is fused onto the surface of the metal 1.

(Fluororesin film 3)

The fluororesin to be used in the preparation of the fluororesin film 3 may be any one selected from among those described in the above section "[Fluororesin]". Particularly, it is desirable to use an ethylene-tetrafluoroethylene copolymer, trifluoroethylene copolymer, vinylidene fluoride copolymer, vinylidene fluoride-tetrafluoroethylene copolymer, vinylidene fluoride-tetrafluoroethylenehexafluoropropylene copolymer, vinyl fluoride polymer, fluoroalkoxyethylene resin, tetrafluoroethylene resin or tetrafluoroethylene-hexafluoropropylene copolymer. Further, ethylene-tetrafluoroethylene copolymers are more desirable, among which a copolymer comprising tetrafluoroethylene and ethylene at a molar ratio of between 40 : 60 and 60 : 40 and containing 0.1 to 10 mole % of a perfluoroalkylvinyl monomer represented by the general formula: $CH_2 = CH-C_nF_{2n+1}$(wherein n is an integer of 2 to 10) is most desirable.

Further, it is preferable that the fluororesin have a melt flow index of 10 to 500 $mm^3$/sec. When the fluororesin has such a melt flow index, the film 3 can be firmly bonded to the metal sheet 1 to give an excellent resin-coated metal free from delamination.

(Print layer 2)

The print layer 2 may be formed on the above fluororesin film 3 by printing or on the surface-treated metal which will be described below. It is preferable from the standpoint of the protection of the layer 2 from abrasion or the like that the print layer 2 be present on the inside surface of the film 3 to come into contact with the metal 1, though the print layer may be present on either of the surfaces of the film 3. The thickness of the print layer 2 is generally preferably 1 to 100 $\mu$m, though it is not particularly limited. The fluororesin film 3 may be selected from among those described above. The thickness of the film 3 is generally 5 to 1500 $\mu$m, preferably 5 to 1000 $\mu$m, though it is not particularly limited.

(Ink composition forming print layer 2)

The ink composition forming the print layer 2 comprises a binder resin, a crosslinking agent, a solvent, a thixotropic agent, a pigment (or a dye) and, if necessary, other various additives.

(a) binder resin

The binder resin to serve as the base resin of the ink composition is preferably a fluororesin or an imide, silicone or polyether sulfone resin. When the print layer 2 is formed on the fluororesin film 3 by printing, it is preferable that the binder resin mainly comprise a fluororesin having hydroxyl and carboxyl groups.

The fluororesin to be used as the binder is preferably one which is prepared by polymerizing a fluoroolefin and which has a fluorine content of 30% by weight or above, particularly 40% by weight or above. Examples of such a fluororesin include ethylene-tetrafluoroethylene copolymer, ethylenechlorotrifluoroethylene copolymer, hexafluoropropylene-tetrafluoroethylene copolymer, perfluoroalkyl vinyl ether-tetrafluoroethylene copolymer, polyvinylidene fluoride and polyvinyl fluoride. Although all of these resins can be used in this embodiment, ethylene-tetrafluoroethylene copolymers are particularly preferably used. Among such copolymers, copolymers comprising a fluoroolefin, a cyclohexyl vinyl ether, an alkyl vinyl ether and a hydroxylalkyl vinyl ether as the essential constituents are still preferable. Further, it is preferable that the copolymer comprise a fluoroolefin, cyclohexyl vinyl ether, an alkyl vinyl ether, a hydroxyalkyl vinyl ether and other comonomer in amounts of 40 to 60 mole %, 5 to 45 mole %, 5 to 45 mole %, 3 to 15 mole % and 0 to 30 mole %, respectively and have an intrinsic viscosity of 0.1 to 2.0 dl/g as determined in tetrahydrofuran at 30°C in an uncured state. Furthermore, with respect to such a copolymer, it is still preferable that the fluoroolefin be a perfluoroolefin such as chlorotrifluoroethylene or tetrafluoroethylene; the alkyl vinyl ether be one having a linear or branched alkyl group having 2 to 8 carbon atoms; and the hydroxyalkyl vinyl ether be hydroxybutyl vinyl ether.

It is suitable that the above carboxylated fluororesin has a fluorine content of 30% by weight or above, preferably 45% by weight or above, still preferably 50% by weight or above. The print layer formed with an ink composition mainly comprising the carboxylated fluororesin according to the present invention is very clear by virtue of the excellent color development of a colorant such as a pigment or dye. The carboxylated fluororesin is preferably a copolymer prepared by copolymerizing tetrafluoroethylene or chlorotrifluoroethylene with a carboxylated vinyl ether or the like, particularly preferably a copolymer comprising a fluoroolefin, a carboxylated vinyl ether, an alkyl vinyl ether, a hydroxyalkyl vinyl ether and cyclohexyl vinyl ether. Further, a copolymer comprising a fluoroolefin, a carboxylated vinyl ether, an alkyl vinyl ether and a hydroxyalkyl vinyl ether is preferably used as the carboxylated fluororesin. It is preferable that the carboxylated fluororesin have an intrinsic viscosity of 0.1 to 2.0 dl/g as determined in tetrahydrofuran at 30 °C in an uncured state like the above carboxyl-free fluororesin. It is still preferable with respect to the above copolymers that the fluoroolefin be a perfluoroolefin such as chlorotrifluoroethylene or tetrafluoroethylene; the alkyl vinyl ether be one having a linear or branched alkyl group having 2 to 8 carbon atoms; the hydroxyalkyl vinyl ether be hydroxybutyl vinyl ether; and the carboxylated vinyl ether be one represented by the general formula: $CH_2 = CH\text{-}O\text{-}R_1\text{-}COOH$ (wherein $R_1$ is an alkylene group having 1 to 10 carbon atoms).

The acid value of the above carboxylated fluororesin is desirably 0.05 to 10.0, more desirably 0.1 to 5.0, most desirably 0.5 to 3.0. A carboxylated fluororesin having an acid value falling within this range can give an ink composition which is excellent in the dispersibility of a pigment, storage stability, printability, color development, and so forth.

Preferable examples of the polyimide resin to be used as the binder include linear (condensation-type) polyimide resins, modified polyimide resins and addition-type polyimide resins.

The linear (condensation-type) polyimide resin is, for example, a resin prepared by reacting an aromatic tetracarboxylic acid dianhydride with an aromatic diamine in nearly equimolar amounts in a polar solvent to form a polyamic acid and thermally or chemically dehydrating the polyamic acid to form a high-molecular polyimide resin through formation of imide rings. Specific examples of such a polyimide resin include Pyralin (a product of Du Pont), u varnish (a product of Ube Industries, Ltd.) and LarcTPI (a product of Mitsui Toatsu Chemicals, Inc.). Generally, a linear (condensation-type) polyimide resin has a high glass transition temperature (Tg), is poor in fluidity and has only a narrow latitude in the selection of a solvent, so that the print layer may be formed by, e.g., applying an ink composition containing a solution of an amic acid prepared by reacting benzophenone-tetracarboxylic dianhydride (BTDA) with 3,3'-diaminobenzophenone (DABP) as the binder and heating the applied ink composition to condense the amic acid into a polyimide through dehydration.

The modified polyimide resin is a polyimide resin which is improved in moldability by imparting flexibility to the backbone by the introduction of an amide, ether or ester group, while the addition-type polyimile resin is, for example, a resin which is prepared by introducing a reactive unsaturated bond to the ends of a low-molecular imide oligomer (with nadic acid, maleic acid, acetylene or the like) and thermally treating the resulting oligomer to conduct chain lengthening, three-dimensional crosslinking and/or curing. Specifically, examples of the nadic acid-terminated polyimide includes Larc (a product of NASA), while those of the acetylene-terminated polyimide includes Thermid (a product of NSC).

The silicone resin to be used as the binder includes polydimethylsiloxane resin and modifications thereof, methylphenylsiloxane resin, diphenylsiloxane resin, polyester-modified siloxane resin, epoxy-modified siloxane resin, urethane-modified siloxane resin and alkyd-modified siloxane resin.

The polyether sulfone resin to be used as the binder includes resins mainly comprising polyether sulfone, and modifications of these resins characterized by having sulfone groups at the ends.

The above binder resins may be used alone or as a mixture of two or more of them in the preparation of the ink composition forming the print layer 2. It is desirable that an ink composition containing the above binder resin be directly applied to the surface-treated metal (such as aluminum) which will be described below to form the print layer 2. Among the above binder resins, fluororesins and imide resins are desirable. When an ink composition is applied to the above fluororesin film 3 to form the print layer 2, it is desirable to use the above fluororesin having hydroxyl and carboxyl groups as the binder of the ink composition.

It is preferable that the ink composition to be used for forming the print layer on the surface of a metal sheet take a form of a dispersion of a particulate fluororesin in a resin solution.

The particulate fluororesin is a fluororesin which can be molten to be combined with the fluororesin film and has desirably a melt flow index of 10 to 500 cc/min, more desirably 20 to 400 cc/min, most desirably 30 to 300 cc/min. The particle diameter of the particulate fluororesin is generally preferably 1 to 80 $\mu$m. When the particle diameter falls within this range, the resulting printed metal sheet can be firmly fused onto a fluororesin film and the resulting ink composition is excellent in printability to give a print having good appearance. Further, the particulate fluororesin may be a colorant-containing one which is prepared by kneading the above fluororesin with part or the whole of the colorant prepared by the use of a pigment or a dye and pulverizing the obtained mixture.

It is desirable that the ink composition to be used for forming the print layer 2 on the fluororesin film 3 have a melt flow index of 1 to 500 cc/min, more desirably 20 to 400 cc/min, most desirably 30 to 300 cc/min. When the melt flow index is less than 1 cc/min, the resulting printed fluororesin film will not be fused firmly onto the metal sheet 1 in the fusing step which will be described below, while when it exceeds 500 cc/min, the resulting ink composition will run in printing characters and figures unfavorably.

The above melt flow index is a value determined with respect to the solids of the ink composition freed from the solvent component, and serves as an indication of the fluidity of the thermoplastic resin in a molten state. The melt flow index is determined by, e.g., extruding 1 g of a sample through a nozzle having a diameter of 1 mm and a land of 2 mm by the use of a Koka type flow tester at 300°C under a load of 30 kg/cm$^2$ and measuring the volume of the molten sample extruded per unit time. The above extrusion temperature is selected within the range in which the test resin (fluororesin) can be melt processed (i.e., the range from the flow-initiating temperature to the thermal decomposition-initiating temperature) so as to be near the flow-initiating temperature.

The solvent to be used in the ink composition is one having a boiling point of 100 to 230°C, particularly preferably 120 to 200°C, and preferable examples of the solvent are as follows:

- aliphatic hydrocarbons: mineral spirits,
- aromatic hydrocarbons: xylene, solvent naphtha, tetralin, dipentene and toluene,
- alcohols: cyclohexyl alcohol and 2-methylcyclohexyl alcohol,
- esters: butyl acetate,
- ketones: cyclohexanone, methylcyclohexanone, diacetone alcohol and isophorone,
- glycols: ethylene glycol and propylene glycol,
- glycol ethers: methyl Cellosolve (ethylene glycol monomethyl ether), Cellosolve (ethylene glycol monoethyl ether), butyl Cellosolve and Carbitol,
- glycol ether esters: Cellosolve acetate, butyl Cellosolve acetate and Carbitol acetate (diethylene glycol monoethyl ether acetate), and
- amides: dimethylformamide and dimethylacetamide.

(b) pigment or dye

The pigment or dye to be used in the ink composition is suitably selected in consideration of the object and use.

The pigment includes inorganic, organic and extender pigments. Preferable examples of the inorganic pigment include titanium oxide, carbon black, red iron oxide, iron black, iron blue, ultramarine blue zinc white, chrome yellow, chrome vermilion, cobalt blue, fired green, zinc sulfide, bronze powder, aluminum powder and pearlescent pigment, while those of the organic pigment include insoluble azo pigments, azo lakes, quinacridone red, carmine red, Watching Red, condensed azo red, perylene red, anthraquinone, disazo orange, dinitroaniline orange, acetolone orange, disazo yellow, Hansa yellow, acetolone yellow, chlorinated phthalocyanize, brilliant green lake, phthalocyanine, indanthrene blue, dioxazine violet, methyl violet, fluorescent pigments and phosphorescent pigments. Further, preferable examples of the extender pigment include aluminum hydroxide, precipitated barium sulfate, calcium carbonate, alumina white and clay.

On the other hand, the dye to be used in the ink composition may be a conventional acid, basic, oil-soluble or disperse dye, and examples of the oil-soluble dye include azo, triarylmethane, anthraquinone and azine dyes. Further, the pigment may be selected from among those described above with respect to the colored fluororesin film, i.e., those listed in the above Table 1.

When a bright-color pigment is used in the preparation of the ink composition, it is essential that the pigment be used together with a silicone resin. Although the bright-color pigment may be any of organic and inorganic ones, it is a pigment which has a high brightness and is liable to yellow. Particular examples of the bright-color pigment include titanium oxide, titanium yellow and cobalt blue.

The yellowing of the above bright-color pigment can be prevented by mixing the pigment with a silicone resin homogeneously, or by coating the pigment with it. The bright-color pigment thus coated may further be heated to cure the resin, and thereafter pulverized at need. The silicone resin may be any one having a polysiloxane structure, preferably one having a phenyl or methyl group, still preferably one having a dimethylsiloxane structure. Specific examples of the silicone resin include polydimethylsiloxane, polymethylphenylsiloxane and polydiphenylsiloxane; and resins prepared by modifying these resins with epoxy, amine, fluorine-modified polyester resin, polyether, carboxyl, alkyl and alcohol. It is preferable that the silicone resin be one which is insolubilized against any solvent by heating and does not suffer from yellowing. The silicone resin is used in an amount of 0.1 to 10 parts by weight, preferably 1 to 5 parts by weight per 100 parts by weight of the colorant.

(c) thixotropic agent

The thixotropic agent to be used in the ink composition includes colloidal silica (Aerosil #400), aluminum alcoholate, organic bentonite and barium sulfate.

It is desirable that the above ink composition have a thixotropy index (TI index) of 2 to 8, more desirably 3 to 7, most desirably 4 to 6. Each TI value is represented by the ratio of the viscosity $N_2$ to the viscosity $N_{20}$, i.e., $TI = N_2/N_{20}$, wherein the viscosities $N_2$ and $N_{20}$ are determined by the use of a BH viscometer with a No. 7 rotor at 25°C at the rates of 2 and 20 rpm, respectively.

(d) other additives

The ink composition may contain various additives, and preferable examples thereof include gelling agent, thickening agent, antioxidant, antifoaming agent, matting agent, ultraviolet absorber and light stabilizer. Further, a curing catalyst such as benzyltriethylphosphonium chloride may be used at need.

Furthermore, the ink composition may contain a crosslinking agent and the use of a crosslinking agent brings about the following advantages.

The crosslinking agent contained in the ink composition crosslinks the above fluororesin binder in fusing the above fluororesin film 3 onto the metal sheet 1, by which the strength of the print layer 2 is enhanced to make the layer 2 strong and the bond strength of the print layer 2 to the fluororesin film 3 or the metal sheet 1 is enhanced to prevent the print layer 2 from peeling off the film 3 or the sheet 1.

The above crosslinking agent may be, for example, a polyol of OH crosslinking type, an amine of amine crosslinking type or a peroxide of peroxide crosslinking type.

Polyol crosslinking agents of OH crosslinking type do not cure the fluororesin binder in storage, i.e., do not cause troublesome scorching, and exhibit a high crosslinking rate, being excellent crosslinking agents. Preferable examples of the polyol crosslinking agents include bisphenol and bisphenol AF (hexafluoroisopropylidenebisphenol). When such a polyol crosslinking agent is added to the ink composition, an acid acceptor such as magnesium oxide, zinc oxide or calcium hydroxide may be added thereto at need to remove the acid formed by the crosslinking.

The organic amine crosslinking agents cause troublesome scorching to necessitate the use of a scorch retarder, though the agents advantageously exhibit a high crosslinking rate. Further, the addition of an acid acceptor is necessary. Preferable examples of the organic amine crosslinking agent include hexamethylenediamine, hexamethylenediamine carbamate (HMDAc), ethylenediamine carbamate and N,N'-dicinnamylidene-1,6-hexanediamine (DCHDA).

The above peroxide crosslinking agents do not always necessitate the use of an acid acceptor and can crosslink the fluororesin binder through stable C-C linkages. Preferable examples of the peroxide crosslinking agent include benzoyl peroxide and dicumyl peroxide.

The above crosslinking agent is desirably used in an amount of 1 to 20 parts by weight, more desirably 2 to 15 parts by weight, most desirably 3 to 10 parts by weight, per 100 parts by weight of the fluororesin binder.

(e) composition of the ink composition

The ink composition according to the present invention comprises the components described above. Preferably, the ink composition comprises 100 parts by weight of a binder resin, 50 to 150 parts by weight of a solvent, 0 to 10 parts by weight of a thixotropic agent, a suitable amount (which is generally 10 to 400 parts by weight, though it varies depending upon the object and use) of a pigment or dye, suitable amounts of other additives and, if necessary, 0.1 to 25 parts by weight of a curing catalyst. When the ink composition is applied directly to the fluororesin 3, it is desirable that the thixotropic agent be contained in an amount of 2 to 10 parts by weight and the curing catalyst be contained in an amount of 0.1 to 2 parts by weight. The components constituting the ink composition and the amounts thereof are suitably selected so as to give an ink composition having a melt flow index of 1 to 500.

14

(Metal sheet 1 and preferred embodiment of the treatment thereof)

(a) The metal sheet 1 may be suitably selected from among those described above.

(b) When the print layer 2 is formed on the surface of the metal sheet 1 made of aluminum or an aluminum-base alloy, it is preferable that the metal sheet be surface-treated prior to the formation of the layer 2. The thickness of the metal sheet 1 is not particularly limited, but may be suitably selected as described above. When the ink composition is applied directly to the surface of the metal sheet 1, it is desirable that the surface of the metal sheet be pretreated as follows.

The surface of the aluminum or aluminum-base alloy sheet is roughened so as to give a center-line-average roughness (Ra) of 0.5 to 30.0 $\mu$m, desirably 1 to 15 $\mu$m, more desirably 1 to 10 $\mu$m, most desirably 1.5 to 5 $\mu$m and a ten-point-average roughness (Rz) of 1 to 100 $\mu$m, desirably 3 to 50 $\mu$m, more desirably 5 to 30 $\mu$m, most desirably 7 to 25 $\mu$m. When the surface roughness of the metal sheet is below these ranges, the adhesion of the print layer to the aluminum surface will be poor, while when it exceeds the above ranges, the resulting ink composition will run to fail in forming a sharp linear print and will shorten the life of a screen fabric. The aluminum sheet is preferably one having a thickness of 0.5 to 5 mm. The above center-line-average roughness (Ra) and ten-point-average roughness (Rz) are as stipulated according to JIS B0601.

The surface of the aluminum sheet can be roughened by, e.g., blasting or a combination of blasting and wet etching. Particularly, when the surface is subjected to blasting and wet etching successively, a roughened surface having fine recesses broadening toward the inside can be formed, by which the adhesion of the print layer and the resin film to the aluminum sheet can be further enhanced.

The above blasting can be conducted by the use of, e.g., soft-iron powder. The soft-iron powder is one having a mean particle diameter of 1000 $\mu$m or below, preferably 100 to 300 $\mu$m. Further, the soft-iron powder is generally one having a Rockwell hardness $H_RC$ of less than 40, preferably about 20 to 35. The Rockwell hardness $H_RC$ is determined according to JIS B 7726 and JIS Z 2245.

The soft-iron powder is preferably a reduced one. Such a reduced soft-iron powder can be easily prepared by a process which comprises reducing iron oxide in a stream of hydrogen under heating or a process which comprises thermally treating mild steel in an ammonia atmosphere, pulverizing the resulting mild steel, and denitrifying the obtained powder. The process for preparing the reduced soft-iron powder is not limited to these processes, but reduced soft-iron powders prepared by other reducing process or through other path may be used in the blasting. Generally, a soft-iron powder having an iron content of 90% or above is favorably used in the blasting. In other words, it is favorable to use a soft-iron powder containing carbon, oxides and other impurities in as low an amount as possible in the blasting. Except for the requirement described above, the operation, conditions or equipment of the blasting are not particularly limited.

The wet etching to be conducted with the above blasting may be electrolytic etching. The process for conducting the electrolytic etching is not limited to known processes for the surface treatment of aluminum, but may be any one. For example, the electrolytic etching process described in Japanese Patent Laid-Open No. 38435/1977 can be employed. Generally, it is preferable that the electrolytic etching be conducted in an aqueous solution containing a water-soluble chloride as an electrolyte by applying a direct current of 1 C/cm$^2$ or above.

When an aluminum sheet is subjected to the above blasting and electrolytic etching, it is preferable that the surface of the sheet be roughened by the blasting to form an intermediate surface having a center-line-average roughness (Ra) of 0.5 to 10.0 $\mu$m and a ten-point-average roughness (Rz) of 1.0 to 30.0 $\mu$m and thereafter the intermediate surface be electrolytically etched to form a rough surface having a center-line-average roughness (Ra) of 1.0 to 30.0 $\mu$m and a ten-point-average roughness (Rz) of 1.0 to 100 $\mu$m.

Although the operation, conditions and equipment of the electrolytic etching are not particularly limited, it is desirable that the surface which need not be etched is marked with an electrical insurant, and it is effective in forming a lustrous coating film that the electrically etched sheet is washed with water to remove formed smut. Although the time of the electrolytic etching can be shortened by raising the etching temperature, it is particularly preferable that the temperature be 10 to 60°C, still preferably 20 to 40°C.

Although the water-soluble chloride to be used in the electrolytic etching includes various ones, it is preferable from the standpoints of price and safety for the human bodies that the chloride be sodium chloride, potassium chloride or ammonium chloride. When such a chloride is used, it is preferable that the chloride ion concentration of the aqueous solution be 0.1 to 10% by weight, still preferably 1 to 5% by weight. In such a case, it is preferable to apply a direct current of 5 to 50 C/cm$^2$, still preferably 10 to 40 C/cm$^2$.

Further, it is preferable in the present invention for attaining the smooth and advantageous electrolytic etching to form a uniformly etched surface that the electrolytic etching be conducted immediately after the completion of the blasting with soft-iron powder. The abrasive used in the blasting can be completely removed by dry brushing using a simple nylon brush. In the present invention, the wet etching can be conducted by chemical etching as well as the above electrolytic one.

When the aluminum sheet treated by the above processes is used, it is desirable that the non-fluororesin-coated surface of the resulting coated aluminum sheet, i.e., the surface at which aluminum appears is covered with an oxide layer formed thereon by anodic or chemical oxidation. Particularly, it is more desirable that the cut area of the coated aluminum sheet formed in working is covered with such an oxide layer.

(Process for forming fluororesin layer and print layer)

(a) Case wherein the print layer is preliminarily formed on the resin film

The process for producing the fluororesin-coated metal of this embodiment is not limited, but may be any arbitrary one. For example, the fluororesin-coated metal of this embodiment can be produced by applying the above ink composition to a fluororesin film 3 to form a film having a print layer 2 and fusing the resulting film onto the surface of a surface-treated metal sheet 1 with the print layer being faced toward the surface of the metal. Alternatively, the film may also be fused to the metal with the print layer being faced outside. Further, the fluororesin-coated metal of the present invention can also be produced by forming a print layer 2 on the surface of the metal sheet 1 with the above ink composition and fusing a fluororesin film onto the surface of the resulting metal sheet.

The process for forming the print layer 2 on the fluororesin film 3 is not particularly limited, but may be any means by which a thin film of the ink composition can be formed in a state adherent to the film 3. For example, the print layer 2 may be formed on the fluororesin film 3 by screen process printing. Alternatively, the print layer may be formed by applying the ink composition directly to the metal sheet 1.

The process for forming the print layer 2 on the fluororesin film 3 will now be described specifically.

A fluororesin film having a thickness of 5 to 1000 $\mu$m is used as the film 3 and the ink composition is applied to the film by screen process printing with a screen having an opening size of 100 to 300 mesh in such a way as to form a thin film having a thickness of 1 to 100 $\mu$m, thus forming a print layer 2.

It is preferable for enhancing the adhesion of the print layer to the fluororesin film that the surface of the fluororesin film 3 to be printed be preliminarily activated by corona discharge, blasting, sodium etching or the like so as to exhibit a wettability index of 35 dyn or above.

Then, the above ink composition may be conventionally applied to the fluororesin film pretreated by the above process by screen process printing with the above screen. When the ink composition used in this step has a thixotropy index of less than 3, snap off and/or thread-forming will occur undesirably, while when it has a thixotropy index exceeding 8, printing of hollow and/or poor self-leveling will occur unfavorably.

The thus-prepared fluororesin film 3 having the print layer 2 formed on the surface thereof is laid on the surface of the metal sheet 1 which has been surface-treated, with the print layer 2 being faced toward the surface of the metal sheet, and thereafter the resulting laminate is heated to 260 to 360 °C to fuse the film onto the metal sheet. Thus, the fluororesin-coated metal according to this embodiment is produced.

According to the present invention, the melt flow index of the solids of the ink composition forming the print layer 2 is adjusted to 1 to 500, by which the printed pattern can be maintained clear even during the above fusing and the firm print layer 2 can be fused onto the surface of the metal sheet 1.

Therefore, according to the present invention, when the fluororesin film 3 is fused onto the surface of the metal sheet 1, the carboxylated fluororesin containing hydroxyl group in the ink composition is crosslinked with crosslinking agents to thereby obtain the fluororesin-coated metal having the firm print layer 2 of characters and figures, which hardly peels off.

(b) Case wherein the print layer is formed on the surface of metal

The fusing of a fluororesin film onto an aluminum sheet can be conducted by, e.g., a process which comprises preheating an aluminum sheet to a temperature above the melting point (softening point) of the fluororesin constituting the film and press-bonding the fluororesin film to the resulting aluminum sheet by the use of a roller press made of a heat-resistant rubber. In this press-bonding, it is preferable to control the pressure loading of the roller press, the surface speed of the roller press and the temperature of the preheated aluminum sheet within respective predetermined ranges. When these conditions are not well controlled, the film will be liable to wrinkle owing to the air bubbles caught under the film. It is generally preferable that the pressure loading of the roller press be 5 to 30 kg/cm, still preferably 10 to 25 kg/cm, and the surface speed thereof be 3 to 50 m/min, still preferably 5 to 20 m/min.

Further, the temperature of the preheated metal sheet is generally 270 to 340 °C, though it is needless to say that the temperature must be suitably selected in consideration of the kind of the fluororesin film.

The details of the above fusion process are disclosed in, e.g., the specifications of Japanese Patent Application Nos. 40916/1976 and 13023/1977. The above pressure loading of the roller press is expressed in the pressure per unit length (cm) of the direction of the roll shaft.

When a colored fluororesin film is used, the laminate prepared by the above press-bonding may be reheated as described above. The colored fluororesin film may be one colored with carbon black, chrome vermilion, copper phthalocyanine blue, red iron oxide, cobalt blue, fired green, titanium yellow or the like in a translucent state.

The formation of the print layer on the surface of a metal sheet may be conducted by any means by which a thin film of the ink composition can be formed in a state adherent to the sheet. For example, the print layer can be formed by applying the ink composition directly to an aluminum sheet by screen process printing or the like. The above print layer is not particularly limited, but may be formed in various patterns including characters and figures.

The metal to be coated with a fluororesin according to the present invention is not limited to the metal sheet 1 described above, but may be any one to which a fluororesin film can be fused.

The fluororesin-coated metal according to the present invention is advantageous in that the fluororesin film is firmly fused to a metal and therefore hardly peels off the metal and that a vividly colored from print layer can be formed.

(3) Embodiment of the fluororesin-coated metal wherein the cut area is covered with protective film

The present invention also relates to an aluminum or aluminum-base alloy partially coated with a fluororesin or a work thereof, in which the non-fluororesin-coated surface, at least the cut area formed in working is covered with an oxide layer formed thereon by anodic or chemical oxidation.

Although the partial coating of aluminum or an aluminum-base alloy with a fluororesin may be conducted by any means by which a fluororesin layer can be formed on such an aluminum substrate, it is generally conducted by fusing a fluororesin film to the substrate, sticking the film to the substrate with an adhesive, or applying a fluororesin coating material to the substrate. Particularly, it is preferable in this embodiment that a fluororesin film be fused to the substrate. In this embodiment, a colorless transparent fluororesin film may be applied to an aluminum substrate so that the surface pattern of the aluminum substrate can be seen from the outside as described in Japanese Patent Application No. 262211/1989. Alternatively, a fluororesin film colored with a colorant uniformly may be used, with the colorant including red iron oxide, Hansa yellow, copper phthalocyanine blue, carbon black and titanium oxide. Further, a fluororesin film having a print layer may also be used.

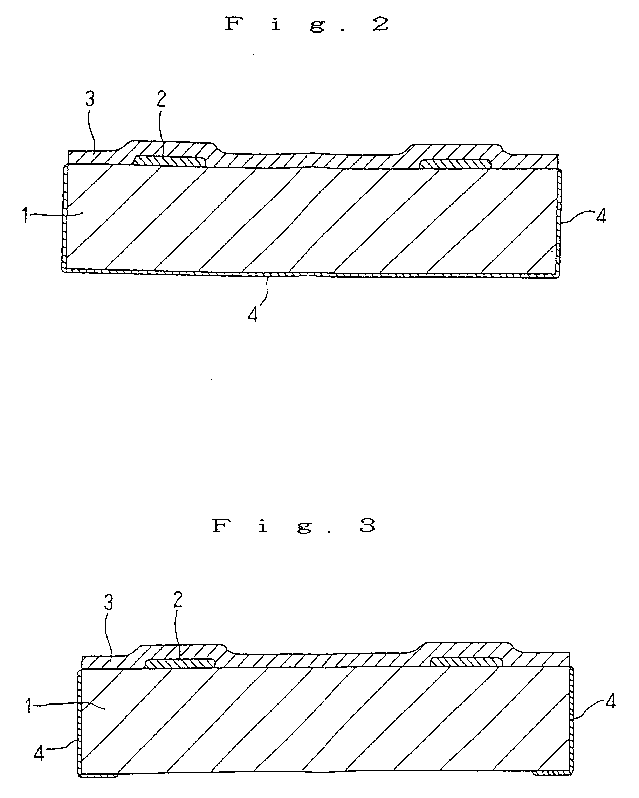

Fig. 2 is a schematic partial sectional view of an example of the resin-coated metal having a protective film.

The resin-coated metal of this example as well as the one shown in Fig. 1 is one prepared by fusing a fluororesin film 3 having a print layer 2 formed thereon with an ink composition onto the surface of a metal 1.

Although the material of the metal sheet 1 is not particularly limited but may be suitably selected from among those described above, it is generally preferable to use aluminum or an aluminum-base alloy as the material of the sheet 1. The thickness of the metal sheet 1 is not particularly limited, but may be suitably selected.

The above print layer 2 is formed by applying an ink composition to the fluororesin film 3. Although the print layer 2 may be formed on either of the surfaces of the film 3, it is preferable from the standpoint of protecting the print layer 2 from wear that the layer 2 be formed on the back surface to come into contact with the metal sheet 1. The thickness of the print layer 2 is generally 1 to 100 $\mu$m, though it is not particularly limited. The fluororesin film 3 may be selected from among those described above. The thickness of the film is generally preferably 5 to 1000 $\mu$m, though it is also not particularly limited.

Then, the metal sheet, ink composition and fluororesin film will be described in more detail.

(Metal sheet 1)

The metal sheet 1 to be used in this embodiment may be suitably selected from among the materials described in the above section "Metallic material". As described above, various metals can be used as the material of the sheet 1. Among them, aluminum, various aluminum-base alloys such as duralumim and aluminum metals containing a small amount of manganese, magnesium or the like are preferable. It is preferable for enhancing the adhesion of the fluororesin film to the metal that the metal sheet 1 be preliminarily surface-treated by subjecting the sheet to the above surface treatment, cleaning (such as degreasing) and surface roughening (such as sand blasting and/or chemical etching).

(Print layer 2)

The ink composition forming the print layer 2 according to this embodiment is basically the same as that of the print layer 2 shown in Fig. 1.

That is, the ink composition contains a crosslinking agent and mainly comprises a binder resin. The resin to be used as the binder includes fluororesins and acrylic resins, among which fluororesins are preferable (hereinafter, the case of using a fluororesin binder will be mainly described). The ink composition comprises such a binder resin, a crosslinking agent, a solvent, a thixotropic agent, a pigment (dye) and, if necessary, other various additives.

The fluororesin binder, crosslinking agent, solvent, pigment, thixotropic agent and other additives to be used in the preparation of the ink composition according to this embodiment may be the same as those described above.

The melt flow index of the above ink composition is desirably 1 to 500, more desirably 20 to 400, most desirably 30 to 300. When the melt flow index is less than 1, the resulting printed fluororesin film will not be fused firmly to the metal sheet 1 in the fusing step which will be described below, while when it exceeds 500, the resulting ink composition will run in printing characters and figures unfavorably.

The contents of these components in the ink composition may be the same as those of the ink composition used in the product shown in Fig. 1.

(Resin layer 3)

The resin layer 3 according to this embodiment may be the above fluororesin film. Further, the surface treatment and printing of the resin layer may be conducted in the same manner as that of the resin layer shown in Fig. 1.

Further, various resin films other than the above fluororesin film may be used in the above surface treatment. Examples of such films include vinyl chloride resin film, (meth)acrylic resin film and polyethylene resin film. It is preferable that these films as well as the above fluororesin film have a melt flow index of 10 to 500 cm$^3$/sec and a thickness of 30 to 100 $\mu$m. The other characteristics of these films are basically the same as those of the above fluororesin film and the uses of the coated aluminum sheets produced by the use of these films are the same as those of the fluororesin-coated aluminum. Further, a colored film of a fluororesin or other resin may be used to make the product more decorative.

(Formation of oxide layer)

As shown in Fig. 2, the metal 1 may be the same as the above aluminum material, and the print layer 2 and the fluororesin film 3 may also be the same as those described above.

This embodiment relates to a fluororesin-coated metal comprising an aluminum sheet and a fluororesin layer formed on the surface of the aluminum sheet or a work thereof, wherein at least the cut area is covered with an oxide layer 4 formed thereon by anodic or chemical oxidation. This oxide layer 4 may be formed by any of the processes described in "Aluminum Handbook" (published by Asakura Shoten, edited by Japan Light Metal Association), pp.819 to 873 (9.4 "Anodic and Chemical Coatings").

Examples of the above oxide layer include anodic oxide films such as sulfuric acid oxidation coating, oxalic acid oxidation coating and chromic acid oxidation costing; and chemical conversion coatings such as those formed by MBV, EW, LW, boehmite, Pylumin, Alrok, Jirotka, Pacz, Mcculloch, Iridite, new VAW and CPCAP processes, phosphate process and phosphoric acid-alcohol process, among which anodic oxide films are preferable. Particularly, sulfuric acid oxidation coating and oxalic acid oxidation coating are desirable and the former is more desirable.

When the sulfuric acid anodization is applied to aluminum, aluminum is anodized in a 10 to 20% aqueous solution of sulfuric acid as an electrolytic solution under the conditions of a current density of 0.6 to 2 $A/dm^2$ a voltage of 10 to 25 V and a temperature of 15 to 25°C for 20 to 60 minutes to form an oxide layer having a thickness of 6 $\mu$m or above, while when the oxalic acid anodization is applied to aluminum, aluminum is anodized in a 2 to 4% aqueous solution of oxalic acid as an electrolytic solution under the conditions of a current density of about 0.5 $A/dm^2$, a voltage of 25 to 35 V and a temperature of 20 to 29°C for 20 to 60 minutes to form an oxide layer having a thickness of 6 to 18 $\mu$m.

On the other hand, the formation of an oxide layer by chemical oxidation is conducted by, e.g., subjecting an aluminum sheet having a fluororesin film formed on its surface by fusing or a bended article thereof to degreasing, washing with water, oxidation and washing with water in this order.

According to this embodiment, such an oxide layer must cover at least the cut area of the fluororesin-coated aluminum, preferably the whole of the surface thereof which is liable to come into contact with water and is not coated with a fluororesin. Particularly, it is effective in enhancing the resistances of the product to weather and corrosion that the whole of the non-fluororesin-coated surface thereof including the cut area and the back is covered with an oxide layer.

According to the present invention, a colored anodized aluminum film, i.e., a colored anodic oxide layer may be formed.

Self-color anodizing, electrolytic pigmentation and dyeing are known as the processes for coloring an anodic oxide layer, any of which can be employed in the present invention. Among them, self-color anodizing and electrolytic pigmentation are preferable and the latter is still preferable from the standpoints of the color and endurance of the colored oxide layer. In self-color anodizing, color development is conducted by selecting the minor component of the aluminum-base alloy to be used as the substrate or the composition of the electrolytic solution to be used. For example various colors such as gold, amber, bronze, gray and black can be developed by using an aluminum-silicon alloy or an electrolytic solution containing an organic sulfonic acid or dicarboxylic acid.

The electrolytic pigmentation is conducted by, e.g., subjecting an aluminum sheet which is covered with an oxide layer formed by sulfuric acid anodization to alternating current electrolysis in an electrolytic solution containing a salt of a metal such as nickel, copper or selenium to precipitate a hydroxide or oxide of the metal in the above oxide layer, and coloring the oxide layer gold, amber, bronze, black or the like.

The dyeing is conducted by dyeing an aluminum which has been treated by sulfuric acid anodization with a water-soluble or oil-soluble organic dye or an inorganic dye.

The aluminum to be used in the present invention is not limited, but may be any one which permits the formation of the rough surface described above. An aluminum metal mainly comprising aluminum (in an amount of 90% by weight or above) may be used in the present invention. It is preferable to use an aluminum sheet having a so-celled streak texture. The aluminum sheet having a streak texture includes sheets of pure aluminum and aluminum-base alloys as stipulated in JIS H 4000. Such an aluminum sheet can be prepared by working an aluminum of a particulate texture formed by casting by hot and/or cold rolling to form an aluminum of a texture linear along the direction of rolling, and refining the rolled aluminum by low temperature annealing or the like in such a way that the linear texture is not recrystallized (grained).

The products of the present invention are excellent in weathering resistance, corrosion resistance (CASS test), Taber's abrasion resistance, bendability and so on, so that they can be used in the fields necessitating these characteristics. Particularly, the products are suitable for structural materials and structural members for forming outdoor wall. The term "wall" used in this description includes not only vertical walls but also ceiling, roof floor, pillars and surfaces of other structures.

The resin-coated metal of the present invention may have arbitrary sizes, for example, 1800 × 900 mm, 1200 × 900 mm, 900 × 900 mm, 100 × 100 mm, 50 × 50 mm or 30 × 30 mm. When the resin-coated metal is small, it can be stuck with a pressure-sensitive adhesive. For example, an outdoor panel (with a pressure-sensitive adhesive) can be prepared by the use of a tilelike panel (50 × 50 mm) of the resin-coated metal according to the present invention. That is, such an outdoor panel can be produced by applying an acrylic ester resin pressure-sensitive adhesive (Nissetsu PE-121) to the back of the tilelike panel which is covered with an oxide layer, and covering the formed adhesive layer with a release sheet (PET release sheet Serapiru BM-2 a product of Toyo Metallizing Co., Ltd.)

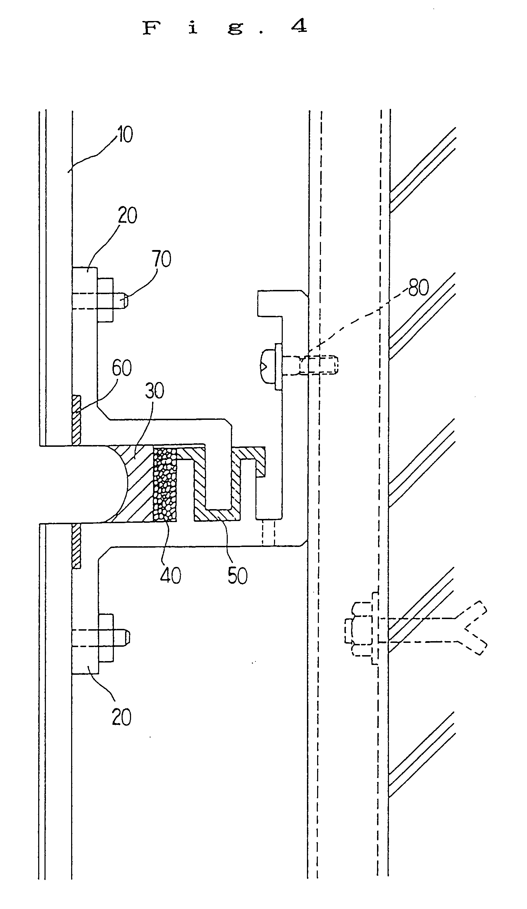

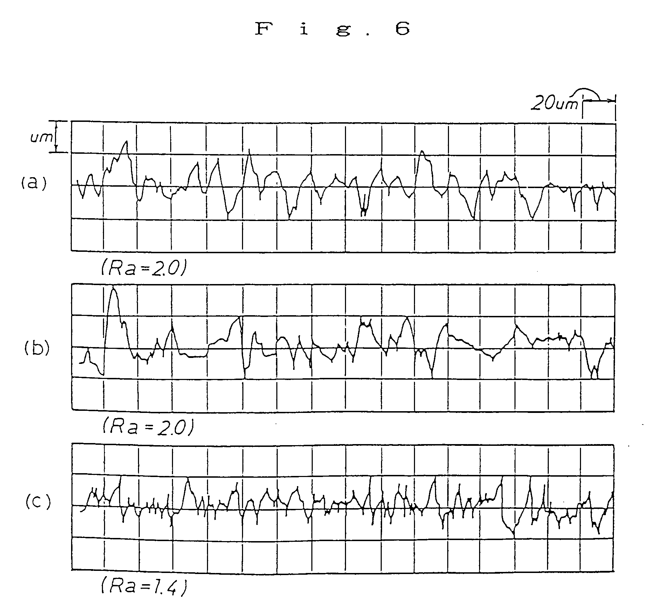

Further, a fluororesin-coated metal produced by fusing a fluororesin film to an aluminum sheet may be subjected to the finishing (such as polishing) of the cut area and the stud welding of a stud bolt for fixing a frame, and thereafter subjected to anticorrosive treatment such as anodizing or coating; and the anticorrosive aluminum sheet thus produced can be used as a structural member for panel application as shown in Fig. 4, though the process for the application is not particularly limited.

(Example)

Examples of the present invention will now be given, though the present invention is not limited by them at all. In the following Examples, samples were evaluated according to the following methods:

(1) CASS test: this test was conducted according to JIS H 8681. Specifically, this test was conducted by the use of a tester stipulated in JIS Z 2371 (salt spray test), i.e., a CASS tester, ISO type (mfd. by Suga Test Instruments Co., Ltd.) and a solution stipulated in JIS H 8681 which contained 5% of sodium chloride, 0.26% of cupric chloride and 0.1% of acetic acid and had a pH of 3.0. The test piece used was a fluororesin-coated metal piece (70 × 200 mm) on which an "X"-shape cut was formed with a cutter so as to reach the metal layer with each axis of the cut having a length of 70 mm.

The anticorrosion effect on the test piece was evaluated by determining the maximum width of the corroded area formed along the cut after 250 hours.

The width of the corroded area is the length thereof perpendicular to one axis of the cut. A smaller width means more excellent fusion of the resin film to the metal.

(2) Taber's abrasion resistance: this test was conducted by the use of an abrasion tester stipulated in JIS K 7204 under the conditions of a load of 500 gf and 1000 rpm. The results are shown by ⊚ (good), △ - (somewhat bad) and X (bad).

(3) weathering resistance: each sample was subjected to accelerated exposure test with a Type WS sunshine carbon (mfd. by Suga Test Instruments Co., Ltd.) stipulated in JIS A 1415-1977 for 5000 hours and the appearance of the resulting sample was compared with that of a stored sample.

A case wherein neither surface degradation nor lowering in the gloss was observed with a little change in the color was shown by "⊚"; a case wherein a little lowering in the gloss was observed with a color difference ΔE of less than 5 was shown by "○"; a case wherein lowering in the gloss was observed with a color difference ΔE of less than 10 was shown by "△"; and a case wherein apparent surface haze and deterioration were observed with a color difference ΔE of 10 or above was shown by "X", with each evaluation conducted as compared with the stored sample.

(4) bendability: a steel roll having a diameter of 2 mm was placed at the center of a test piece having a length of 100 mm, a width of 50 mm and a thickness of 2 mm and the test piece was bent at an angle of 180° by making the roll act as a support to determine whether the bended area suffered from cracking and/or peeling or not.

criteria of the evaluation

△: neither the resin film nor the oxide layer suffered from cracking; the test piece did not generate gas even when immersed in 10% hydrochloric acid (acid resistance test); and the substrate metal was free from crack.

○: although wrinkle due to the cracking of the substrate metal was observed, the resulting test piece passed the acid resistance test and the film was free from crack.

△: although no cracking of the film or the oxide layer was observed with the naked eye, gas evolution was observed in the acid resistance test.

X: apparant cracking of the film and the oxide layer was observed with the naked eye

(5)-1 adhesion test and evalution: the resin film was peeled under the conditions of a width of 25 mm and a peel rate of 300 mm/sec to evaluated the adhesion.

criteria of the evaluation

⊚: the film was broken to fail in peeling

○: the peel strength was 2 kg/25 mm or above

△: the peel strength was 1 to 2 kg/25 mm

X: the peel strength was below 1 kg/25 mm

(5)-2 adhesion test and evaluation: this test is one which has been developed in consideration of practical bending and deep drawing of a resin-coated aluminum and which is conducted under conditions severer than those of the conventional adhesion test. When a resin-coated metal cannot pass this test, the bent area of the coated metal will suffer from lifting or peeling. In this test, the surface of a resin-coated metal was cut in a check pattern of 100 squares with a cutter and the resulting metal was drawn from the back by the Erichsen method in a draw depth of 5 mm to prepare a test piece. This test piece was subjected to a thermal shock test in which a cycle comprising 8-hour heating in boiling water and 16-hour cooling at -20°C was repeated seven times. Thereafter, the resulting test piece was subjected to peel test with a pressure-sensitive adhesive tape to determine the number of squares in witch the resin film still remained. The adhesion was evaluated based on the number.

(6) test on the adhesion after outdoor exposure and evaluation thereof

In this test, a test piece was bent perpendicularly with the resin film being faced outside and the resulting test piece was exposed to the outdoors for 36 months to determine whether the bent area suffered from lifting or peeling or not. The adhesion after outdoor exposure was evaluated based on the results.

criteria of the evaluation

◎:     neither blister nor peeling was observed with a color difference of less than 2

○:     neither blister nor peeling was observed with a color difference of 2 to 5

△:     blister having a size of 1 mm or below was observed in the bended area with a color difference of 5 to 10

X:     blister having a size of 1 mm or above was observed with a color difference of 10 or above

Each color difference was determined based on the color values according to the C.I.E. color system.

(7) thermal discoloration test and evaluation: in this test, the print layer and resin film of a test piece were examined for color change, by which the thermal discoloration resistance of the test piece was evaluated.

criteria of the evaluation

◎:     the difference between the colors before and after the fusing was less than 2

○:     the difference between the colors before and after the fusing was 2 or above but less than 5

△:     the difference between the colors before and after the fusing was 5 or above but less than 10

X:     the difference between the colors before and after the fusing was 10 or above

(8) degree of discoloration: the Hunter whiteness of a metal sheet having a fluororesin layer fused thereto was determined to evaluate the degree of discoloration of the sheet according to the following criteria:

○:     75 or above

△:     70 or above but less than 75

X:     less than 70

(9) evaluation of appearance: whether a metal sheet having a fluororesin layer fused thereto suffered from blister, pinhole or irregular color or not was determined with the naked eye.

(10) positional accuracy of print and evaluation thereof: a pattern of a lattice 100 by 100 millimeters square was printed on an aluminum sheet or fluororesin film having sizes of 1250 $\times$ 2500 mm in sizes of 1200 $\times$ 2400 mm by screen process printing. The resulting film and sheet were fused to each other. The printed lattice pattern of the resulting laminate was compared with that before the fusing to determine the maximum deviation. The positional accuracy was evaluated based on the deviation.

The present invention will now be described more specifically by referring to the following Examples.

(Example 1)

100 parts of an ethylene-tetrafluoroethylene copolymer (ETFE) having a molar ratio of tetrafluoroethylene to ethylene of 53 : 47, a flow-initiating temperature of 280°C and a thermal decomposition initiating temperature of 350°C and exhibiting a melt flow index of 90 mm$^2$/sec at 300°C was kneaded together with 10 parts of red iron oxide as a colorant on a corotating twin-screw extruder to prepare colored pellets. This kneading was conducted under the conditions of 300°C, 100 rpm and an L/D ratio of 30. These colored pellets were melt-extruded into a non-porous colored film having a thickness of 50 $\mu$.

On the other hand, one surface of an aluminum rolled sheet, A5052, stipulated in JIS H 4000 and having a thickness of 2.0 mm was sand-blasted in an average depth of 10 to 15 $\mu$m (degree of surface roughness) and an average cycle of 10 to 20 $\mu$m and the blasted surface was subjected to electrolytic etching. This electrolytic etching was conducted in a 3% aqueous solution of sodium chloride at 40°C by applying a current of 35 C/cm$^2$ at a current density of 4 A/dm$^2$.

The etched surface was washed with water and dried and thereafter the resulting aluminum sheet was preheated to 340°C. The above colored film was laid on the etched surface and bonded thereto under a pressure loading of 20 kg/cm$^2$. The obtained laminate was reheated to 315°C and kept at that temperature for 10 minutes to fuse the film to the sheet. Thus, a fluororesin-coated metal sheet 1 (Invention sample 1-1) was obtained.

Production of Invention sample 1-2

A fluororesin-coated metal sheet (Invention sample 1-2) was produced in the same manner as that of the Example 1 except that the red iron oxide was replaced by 5 parts of copper phthalocyanine blue.

Production of Invention samples 1-3 to 1-34

Fluororesin-coated metal sheets (Invention samples 1-3 to 1-34) were produced in the same manner as that of the Example 1 except that the kind and/or amount of the colorant to be used and the temperature of the reheating treatment were changed as given in Table 1.

Table 1 (Invention samples 1-3 to 1-34)

| Invention sample | Colorant | | Amt. (pt.) | Temp. of reheating (°C) |
|---|---|---|---|---|
| | color | kind of colorant | | |
| 1 — 3 | white | zinc white (ZnO) | 1 0 | 3 2 0 |
| 1 — 4 | | titanium oxide ($TiO_2$) | 8 | 3 0 0 |
| 1 — 5 | | lithopone ($ZnS+BaSO_4$) | 1 0 | 3 0 0 |
| 1 — 6 | | zinc sulfide (ZnS) | 1 0 | 3 0 0 |
| 1 — 7 | red | cadmium red (CdS+CdSe) | 5 | 3 2 0 |
| 1 — 8 | | antimony red ($2Sb_2S_3 \cdot Sb_2O_3$) | 5 | 3 0 0 |
| 1 — 9 | | irgazin red | 3 | 3 0 0 |
| 1 —10 | | perylene red | 3 | 3 0 0 |
| 1 —11 | vermilion | iron oxide [$Fe_2O_3+(FeO)$] | 1 | 3 2 0 |
| 1 —12 | | chrome vermilion ($PbCrO_4 \cdot PbMoO_4 \cdot PbSO_4$) | 2 | 3 2 0 |
| 1 —13 | | amber ($Fe_2O_3+MnO_2+Mn_3O_4$) | 2 | 3 0 0 |
| 1 —14 | yellow | chrome yellow ($PbCrO_4$) | 5 | 3 2 0 |
| 1 —15 | | zinc yellow ($ZnCrO_4$) | 5 | 3 2 0 |
| 1 —16 | | barium chromate ($BaCrO_4$) | 5 | 3 2 0 |
| 1 —17 | | cadmium yellow (CdS) | 5 | 3 2 0 |
| 1 —18 | | titanium yellow ($TiO_2 \cdot NiO \cdot Sb_2O_3$) | 5 | 3 2 0 |
| 1 —19 | | ocher ($Fe_2O_3SiO_2Al_2O_3$) | 5 | 3 2 0 |
| 1 —20 | green | phthalocyanine | 3 | 3 2 0 |
| 1 —21 | | chrome green (iron blue+chrome yellow) | 5 | 3 2 0 |
| 1 —22 | | cobalt green (CoOZnOMgO) | 5 | 3 2 0 |
| 1 —23 | | cerulean blue ($CoO \cdot nSnO_2 \cdot mMgO$) | 5 | 3 2 0 |
| 1 —24 | blue | ultramarine blue ($3NaAl \cdot SiO_4 \cdot Na_2S_2$) | 5 | 3 2 0 |
| 1 —25 | | iron blue [$Fe_4[Fe(CN)_6]_3nH_2O$] | 5 | 3 2 0 |
| 1 —26 | | cobalt blue ($CoO \cdot {}_nAl_2O_3$) | 5 | 3 2 0 |
| 1 —27 | | cyanine blue | 5 | 3 2 0 |
| 1 —28 | purple | cobalt violet [$Co_3(PO_4)_2$] | 5 | 3 2 0 |
| 1 —29 | | cobalt violet [$Co_3(AsO_4)_2$] | 5 | 3 2 0 |
| 1 —30 | | dioxazine violet | 5 | 3 0 0 |
| 1 —31 | black | carbon black | 5 | 3 2 0 |
| 1 —32 | | iron black | 5 | 3 2 0 |
| 1 —33 | | aniline black | 2 | 3 0 0 |
| 1 —34 | | cyanine black | 3 | 3 0 0 |

Production of Invention sample 1-35

A fluororesin-coated metal sheet (Invention sample 1-35) was produced in the same manner as that of the Example 1 except that a chlorotrifluororesin (PCTFE) was used as the fluororesin and the temperature of the reheating treatment was changed to 280°C.

Production of Invention sample 1-36

A fluororesin-coated metal sheet (Invention sample 1-36) was produced in the same manner as that of the Example 1 except that a steel sheet was used as the substrate metal.

(Comparative Example 1)

A fluororesin-coated metal sheet (Comparative sample 1-1) was produced in the same manner as that of the Example 1 except that no reheating treatment was conducted.

Production of Comparative sample 1-2

A fluororesin-coated metal sheet (Comparative sample 1-2) was produced in the same manner as that of the Example 1 except that the temperature of the reheating treatment was changed to 360°C.

The Invention samples 1-1 to 1-36 and the Comparative samples 1-1 and 1-2 were examined for the weathering resistance (3) and the bendability (4) and the results ere given in Table 2.

Table 2

| Invention and Comp. sample | | CASS test (mm) | Discoloration | Bendability |
|---|---|---|---|---|
| Ex. | 1-1 | 0.5 | ◎ | ◎ |
| | 1-2 | 0.5 | ◎ | ◎ |
| | 1-3 | 1.0 | ◎ | ◎ |
| | 1-4~34 | 0.5~3 | ◎ ~ ○ | ○ ~ ◎ |
| | 1-35 | 3 | ◎ | ○ |
| | 1-36 | 2 | ◎ | ○ |
| Comp. Ex. | 1-1 | 30 | ◎ | X |
| | 1-2 | 0.5 | X | △ |

(Example 2)

Prior to the production of a fluororesin-coated metal sheet in the same manner as that of the Example 1, a pigment and a fluororesin film were prepared as follows.

① A polydimethylsiloxane solution (a product of Toshiba Silicone Co., Ltd., TSR127B) was dissolved in toluene to form a 5 wt % solution. 150 g of titanium oxide (a product of Ishihara Sangyo Kaisha, Ltd., CR-90) was dispersed in 100 g of this solution. The obtained dispersion was freed from the toluene by the use of a rotary evaporator to give a silicone-coated titanium oxide.

This coated titanium oxide was thermally treated on a stainless vat at 250°C for 10 minutes and pulverized into particles of 100 mesh or smaller with an atomizer. Thus, a silicone-treated titanium oxide pigment was obtained.

This pigment and ETFE (a product of Asahi Glass Co., Ltd., Aflon COP) were mixed with each other at a weight ratio of 8 : 100 in a twin-cylinder mixer for 10 minutes, kneaded with a corotating twin-screw extruder of shallow flight type under the conditions of 310°C and 200 rpm, and extruded through a die having a hole diameter of 3 mm into a strand. This strand was cooled with water and cut into white pellets. These white pellets were molded by the use of a single-screw extruder under the conditions of 300°C and 50 rpm into a white ETFE film having a thickness of 50 $\mu$m. A fluororesin-coated metal sheet was produced by the use of this ETFE film in the same manner as that of the Example 1.

The coated metal sheet thus produced was subjected to the above CASS test (1), adhesion test ((5)-1), discoloration test (8) and appearance test (9). The results are as follows: CASS test: 0.5, adhesion: ◎, discoloration: ◎, and appearance: ◎

(Example 3)

An ethylene-tetrafluoroethylene copolymer having a molar ratio of ethylene to tetrafluroethylene of 47 : 53, a flow initiating temperature of 280°C and a thermal decomposition initiating temperature of 350°C and exhibiting a melt flow index of 90 mm²/sec at 300°C was melt-extruded into a nonporous white film having a thickness of 20 $\mu$m.

On the other hand, one surface of an aluminum rolled sheet 1100, stipulated in JIS H 4000 and having a thickness of 2.0 mm was blasted with sand in an average depth (degree of surface roughness) of 10 to 15 $\mu$m and an average cycle of 10 to 20 $\mu$m and the other surface thereof was masked with a vinyl chloride resin. Then, the blasted surface was subjected to electrolytic etching. This electrolytic etching was conducted in a 3% aqueous solution of sodium chloride at 40°C by applying a current of 35 C/cm² at a current density of 4 A/dm².

The etched surface was washed with water and dried and thereafter the resulting aluminum sheet was preheated to 340°C. The above white film was laid on the etched surface and bonded thereto under a pressure loading of 20 kg/cm². The obtained laminate was reheated to 250°C and kept at that temperature for 10 minutes to fuse the film to the sheet. Thus, a fluororesin-coated metal sheet was obtained.

The surface of the above fluororesin layer was activated by corona discharge treatment using a corona discharger (mfd. by Kasuga Electric Works Ltd.) at a discharge poser of 120 W/m² min until the wettability index of the surface reached 42 dyn.

Then, an ink composition (viscosity: 570 cP, TI value: 5) prepared by the process which will be described below was applied to the above activated surface with a Tetoron screen having an opening size of 220 mesh and dried in a hot-air circulating oven at 120°C for 2 minutes. Thus, a fluororesin-coated metal sheet having a print layer composed of the above ink composition and having a thickness of 10 $\mu$m on the resin layer was obtained (Invention sample 3-1).

(Preparation of ink composition)

A copolymer comprising tetrafluoroethylene, carboxypentamethylene vinyl ether, ethyl vinyl ether and hydroxybutyl vinyl ether was prepared by the conventional process. This copolymer comprised these monomers at a molar ratio of about 50 : 1.5 : 23 : 25.5 (as determined by nuclear magnetic resonance spectroscopy) and had an intrinsic viscosity of 0.4 dl/g as determined in tetrahydrofuran at 30°C. 100 g of this copolymer was dissolved in a mixture comprising 80 g of Carbitol acetate and 20 g of toluene, followed by the addition of 50 g of red iron oxide and 6 g of colloidal silica. The resulting mixture was sufficiently kneaded with a triple roll mill to give an ink composition. This ink composition had a viscosity of 570 cP and a TI value of 5.

The fluororesin-coated metal sheet (Invention sample 3-1) produced in this Example was examined for Taber's abrasion resistance (2), weathering resistance (3), bendability (4), adhesion (according to CASS test) and color development. The results were all those corresponding to the grade "◎", which revealed that this sample was extremely excellent.

Further, the ink composition used in this Example was excellent in storage stability to exhibit excellent printability, viscosity, snap off, leveling and color development even after being allowed to stand for one month.

(Example 4)

Prior to the production of a fluororesin-coated metal sheet in the same manner as that of the Example 3, a pigment and a fluororesin film were prepared as follows.

① 40 g of a copolymer (246 F resin) comprising polyvinylidene fluoride, tetrafluoroethylene and hexafluoropropylene and 620 g of a silicone-treated titanium oxide were dispersed in 500 g of Carbitol acetate with a triple roll mill so as to give a particle size od 10 $\mu$m or below as determined by the grind gauge.

316 g of an ethylene-tetrafluoroethylene resin having a mean particle size of 20 $\mu$m and 180 g of Carbitol acetate were added to 1000 g of the dispersion prepared above, and the obtained mixture was kneaded with a disper dispersing machine for 30 minutes to give a fluororesin white ink containing a silicone-treated titanium oxide.

(Aluminum sheet covered with a fluororesin film fused thereto)

The above fluororesin white ink was applied to a surface-treated aluminum sheet (JIS5052, thickness: 2 mm) in a thickness of 25 $\mu$m and dried. An ethylenetetrafluoroethylene resin film having a thickness of 50 $\mu$m was fused onto the above printed surface under the conditions of a temperature of preheating of 350°C and an annealing temperature of 310°C. Thus, a fluororesin-coated aluminum sheet was obtained.

The sample produced in this Example was subjected to the above CASS test (1), adhesion test ((5)-1), discoloration test (8) and appearance test (9). The results are as follows: CASS test: 1, adhesion: ⓞ, discoloration: ⓞ and appearance: ⓞ

(Example 5)

This Example will now be described by referring to Fig. 5. This examples is one illustrating a basic embodiment of the present invention, while Example 6 which will be described below is one illustrating embodiments more specific than that of the Example 5.

Fig. 5 is a schematic partial sectional view of a fluororesin-coated aluminum which is one embodiment of the present invention, and Figs. 6 (a), (b) and (c) are each a chart showing the surface unevenness of aluminum suitable for the production of fluororesin-coated aluminum according to the present invention.

The fluororesin-coated aluminum of this Example is one produced by roughening the surface of an aluminum sheet 1 to form a rough surface 1' having a given center-line-average height (Ra) and a given ten-point-average roughness (Rz), forming a print layer 2 on the rough surface 1', and fusing a fluororesin film (resin film) 3 onto the surface having the print layer 2 thereon. That is, this Example is characterized in that a surface 1' having a center-line-average height (Ra) of 1.0 to 30.0 $\mu$m and a ten-point-average height (Rz) of 1.0 to 100 $\mu$m is formed on an aluminum sheet 1; and a print layer 2 is formed on the rough surface 1', by which the objective fluororesin-coated aluminum is produced. In Fig. 5, the above rough surface 1' is shown by a bold line as one layer.

The three charts of Fig. 6 each show a line representing the unevenness of the rough surface of a substrate aluminum, i.e., a section of a surface-roughened aluminum sheet perpendicular to the lengthwise direction of the lauan-like pattern of the sheet. Fig. 6 (a), (b) and (c) are corresponding to a surface having an Ra value of 2.0 $\mu$m and an Rz value of 11.0 $\mu$m, one having an Ra value of 2.0 $\mu$m and an Rz value of 9.5 $\mu$m, and one having an Ra value of 1.4 $\mu$m and an Rz value of 7.0 $\mu$m, respectively, with the Ra and Rz values being determined according to JIS B 0601.

(Example 6)

An aluminum sheet, A3004P-34, stipulated in JIS H 4000 and having a thickness of 2 mm and sizes of 1250 × 2500 mm was prepared and used as a substrate. This aluminum sheet 1 was blasted (with reduced iron powder of 80 mesh and pneumatic pressure: 3 kg/m$^2$) to form a rough surface having fine recesses in a center-line-average height (Ra) of 1.8 $\mu$m and a ten-point-average height (Rz) of 10.5 $\mu$m. The resulting aluminum sheet was leveled with a sheet leveler, by which the warpage of the sheet was reduced to 1 mm or below. The resulting aluminum sheet was electrolytically etched in a 4% aqueous solution of sodium chloride under the conditions of a current density of 3.3 A/dm$^2$ to form a rough surface 1' having a center line-average height (Ra) of 3.5 $\mu$m and a ten-point-average height (Rz) of 25 $\mu$m.

Separately, the components which will be given below were mixed and milled together with an ink mill to give an ink composition. In the preparation of this ink composition, a copolymer (FEVE) was used as the base resin, which had been prepared by copolymerizing chlorotrifluoroethylene with carboxypentamethylene vinyl ether, ethyl vinyl ether and hydroxybutyl vinyl ether at a ratio of about 50 : 1.5 : 23 : 25.5 (as determined by nuclear magnetic resonance spectroscopy) by the conventional process. 100 g of this FEVE was dissolved in a mixture comprising 80 g of Carbitol acetate and 20 g of toluene and the obtained solution was used as the ink base.

| FEVE: | 100 g |
|---|---|
| Carbitol acetate: | 80 g |
| toluene: | 20 g |
| fired green: | 50 g |
| colloidal silica: | 10 g |

Further, a nonporous transparent film (thickness: 50 μm) prepared by melt extruding an ethylene-tetrafluoroethylene copolymer having the following characteristics was used as the resin film in this Example:

| | |
|---|---|
| tetraflxoroethylene/ethylene molar ratio: | 53/47 |
| flow initiating temperature: | 280°C |
| thermal decomposition initiating temperature: | 350°C |
| melt flow index at 300°C: | 90 mm$^3$/sec |

As shown in Fig. 5, a print layer 2 of a lattice 100 by 100 millimeters square was formed on the above surface treated aluminum sheet 1 with the above ink composition by screen process printing and dried in a hot-air circulating oven at 120°C for 10 minutes. The resulting aluminum sheet 1 was preheated to 310°C in a nitrogen atmosphere. As shown in Fig. 5, the above transparent film 3 was laid on the printed surface of the sheet and press bonded thereto under a pressure loading of 20 kg/cm$^2$. The obtained laminate was thermally treated at 315°C for 10 minutes to fuse the film 3 to the sheet 1. Thus, a fluororesin-coated aluminum sheet was obtained (Invention sample 6-1).

Production of Invention sample 6-2

In this production, an ink composition was prepared by mixing and milling the components which will be given below with an ink mill and used as the printing ink. In the preparation of this ink composition, a difluoroethylene-tetrafluoroethylene-hexafluoropropylene copolymer (Kynar 9301, a product of Mitsubishi Petrochemical Co., Ltd.) was used as the base resin; and this copolymer was dissolved in an isophorone/cyclohexane (1 : 1) mixture and the obtained solution was used as the ink base. The ink composition thus prepared was applied to the same treated aluminum sheet as that of the Example 6 in the same manner as that of the Example 6. Then, the subsequent steps were conducted in the same manner as that of the Example 6 except that the printed aluminum sheet 1 was preheated in the air (not in a nitrogen atmosphere). Thus, a fluororesin-coated aluminum sheet was obtained (Invention sample 6-2).

| | |
|---|---|
| Knyar 9301: | 100 parts by weight |
| isophorone: | 75 parts by weight |
| cyclohecane: | 75 parts by weight |
| red iron oxide: | 50 parts by weight |
| colloidal silica: | 10 parts by weight |

Production of Invention sample 6-3

In this production, an ink composition was prepared by mixing and milling the components which will be given below with an ink mill and used as a printing ink. In the preparation of this ink composition, Kynar 9301 was used as the base resin. That is, this resin was dissolved in an isophorone/cyclohexane (1 : 1) mixture; fine particles of an ethylene-tetrafluoroethylene copolymer (Aflon COP Z8820) were dispersed in the obtained solution; and the obtained dispersion was used as the ink base. The ink composition thus prepared was applied to the same treated aluminum sheet as that of the Example 6 in the same manner as that of the Example 6. Then, the subsequent steps were conducted in the same manner as that of the Example 6 except that the preheating of the printed aluminum sheet 1 was conducted in the air. Thus, a fluororesin-coated aluminum sheet was obtained (Invention sample 6-3).

| | |
|---|---|
| Aflon COP Z8820: | 90 parts by weight |
| Kynar 9301: | 10 parts by weight |
| isophorone: | 75 parts by weight |
| cyclohexane: | 75 parts by weight |
| cobalt blue: | 50 parts by weight |

Production of Invention sample 6-4

In this production, an ink composition was prepared by mixing and milling the components which will be given below with an ink mill and used as a printing ink. In the preparation of this ink composition, an acetylene-terminated polyimide resin (Thermid FA700, a product of Kanebo NSC K.K.) was used as the base resin; and this resin was dissolved in cyclohexanone and the obtained solution was used as the ink base. The ink composition thus prepared was applied to the same treated aluminum sheet as that of the Example 6 in the same manner as that of the Example 6. Then, the subsequents steps were conducted in the same manner as that of the Example 6 except that the preheating of the printed aluminum sheet 1 was conducted in the air. Thus, a fluororesin-coated aluminum sheet was obtained (Intention sample 6-4).

| | |
|---|---|
| Thermid FA700: | 100 parts by weight |
| titanium yellow: | 50 parts by weight |
| colloidal silica: | 10 parts by weight |
| cyclohexanone: | 75 parts by weight |

Product on of Invention sample 6-5

In this production, an ink composition was prepared by mixing and milling the components which will be given below with an ink mill and used as a printing ink. In the preparation of this ink composition, a solution of an epoxy-modified silicone resin (a product of Toshiba Silicone Co., Ltd., TSR-194 in isophorone was used as the ink base. The ink composition thus prepared was applied to the same treated aluminum sheet as that of the Example 6 in the same manner as that of the Example 6. Then, the subsequents steps were conducted in the same manner as that of the Example 6 except that the preheating of the aluminum sheet was conducted in the air. Thus, a fluororesin-coated aluminum sheet was obtained (Invention sample 6-5).

| | |
|---|---|
| epoxy-modified silicone resin: | 100 parts by weight (a product of Toshiba Silicone Co., Ltd., TSR-194) |
| titanium yellow: | 50 parts by weight |
| colloidal silica: | 10 parts by weight |
| isophorone: | 150 parts by weight |

Production of Invention sample 6-6

In this production, an ink composition was prepared by mixing and milling the components which will be given below with an ink mill and used as a printing ink. In the preparation of this ink composition, a solution of a polydimethylsiloxane resin (a product of Shin-Etsu Chemical Co., Ltd., KR-271) in isophorone was used as the ink base. The ink composition was applied to the same treated aluminum sheet as that of the Example 6 in the same manner as that of the Example 6. Then, the subsequent steps were conducted in the same manner as that of the Example 6 except that the preheating of the printed aluminum sheet was conducted in the air. Thus a fluororesin-coated aluminum sheet was obtained (Invention simple 6-6).

| | |
|---|---|
| polydimethylsiloxane resin: | 100 parts by weight (a product of Shin-Etsu Chemical Co., Ltd., KR-271) |
| red iron oxide: | 40 parts by weight |
| colloidal silica: | 5 parts by weight |
| isophorone: | 150 parts by weight |

Production of Invention sample 6-7

In this production, an ink composition was prepared by mixing and milling the components which will be given below with an ink mill and used as a printing ink. In the preparation of this ink composition, a solution of a polyether sulfone resin (a product of Simitomo Chemical Co., Ltd., 5003P) in dimethylacetamide was used as the ink base. The ink composition was applied to the same aluminum sheet as that of the Example 6. Then, the subsequent steps were conducted in the same manner as that of the Example 6 except that the preheating of the printed aluminum sheet was conducted in the air. Thus, a fluororesin-coated aluminum sheet was obtained (Invention sample 6-7).

| | |
|---|---|
| polyether sulfone: | 100 parts by weight (a product of Sumitomo Chemical Co., Ltd., 5003P) |
| fired green: | 50 parts by weight |
| colloidal silica: | 10 parts by weight |
| dimethylacetamide: | 150 parts by weight |

Production of Invention sample 6-8

In this production, the same printing ink as that used in the Example 6 was applied to a transparent film to print the same pattern as that of the Example 6 on the film. The printed film was fused onto the roughened surface of the same aluminum sheet as that used in the Example 1 with the printed surface being faced to the sheet 1 in the same manner as that of the Example 6. Thus, a fluororesin-coated aluminum sheet was obtained (Invention sample 6-8).

Product on of Invention sample 6-9

In this production, a fluororesin-coated aluminum sheet was produced in the same manner as that of the Example 6 except that the surface of the aluminum sheet was roughened into one having an Ra of 0.3 $\mu$m (Invention sample 6-9).

The obtained Invention samples 6-1 to 6-9 were examined for positional accuracy of print (10), adhesion of print layer and transparent film ((5)-2) and adhesion after outdoor exposure (6). The results are given in Table 3. It can be understood from the results that the Invention samples 6-1 to 6-7 are superior in each of positional accuracy of print, adhesion and heat resistance.

Table 3

| | | 1 | 2 | 3 | 4 | 5 | 6 | 7 | 8 | 9 |
|---|---|---|---|---|---|---|---|---|---|---|
| | | | | | | Samples of Example 6 | | | | |
| Atmosphere | preheating | nitrogen | air | air | air | air | air | air | nitrogen | nitrogen |
| | annealing | air | air | air | air | air | air | air | air | air |
| printing surface | | aluminum | aluminum | aluminum | aluminum | aluminum | aluminum | aluminum | film | aluminum |
| Roughness (Ra) $\mu$m | | 3.5 | 3.5 | 3.5 | 3.5 | 3.5 | 3.5 | 3.5 | 3.5 | 0.3 |
| Printing accuracy (deviation:mm) | lengthwise | 0.1 | 0.1 | 0.1 | 0.1 | 0.1 | 0.1 | 0.1 | 50 | 0.1 |
| | widthwise | 0 | 0 | 0 | 0 | 0 | 0 | 0 | 25 | 0 |
| Adhesion test | | 100/100 | 100/100 | 100/100 | 100/100 | 100/100 | 100/100 | 100/100 | 100/100 | 5/100 |
| Adhesion after outdoor exposure | | ○ | ○ | ◎ | ○ | ○ | ○ | ○ | ○ | × |
| Thermal discoloration resistance | | ○ | ◎ | ◎ | ○ | ○ | ○ | ◎ | ○ | ○ |

(Example 7)

A difluoroethylene-tetrafluoroethylene-hexafluoropropylene copolymer resin (Kynar 9301, a product of Mitsubishi Petrochemical Co., Ltd.) was dissolved in a solvent mixture comprising isophorone and cyclohexane in the following amounts:

| ① | Kynar 9301: | 100 g |
| ② | isophorone: | 75 g |
| ③ | cyclohexane: | 75 g |

The obtained resin solution and the following components (a), (c) and (d) were mixed and milled with an ink mill in the following amounts to give an ink composition:

| (a) | Aflon COPZ8820: | 90 g |
| (b) | Kynar 9301: | 10 g |
| (c) | cobalt blue: | 50 g |
| (d) | aluminum hydroxide: | 20 g |

The ink composition had a thixotropy index of 6.

The above ink composition was applied to the whole surface of a film of an ethylene-tetrafluoroethylene copolymer resin (Aflon COP, a product of Asahi Glass Co., Ltd.) having a thickness of 50 $\mu$m by screen process printing with a 225-mesh screen and dried with hot air at 120°C for 60 minutes. The thickness of the formed print layer was 8 $\mu$m.

The resulting printed film was fused to an aluminum sheet (JIS A 3004 grade) having a thickness of 4 mm in the conventional manner. The obtained laminate was cut with a panel, saw into a panel having sizes of 1200 mm (length) and 900 mm (width). The cut area of the laminate was abraded with a #200 sand paper and thereafter the cut area and back of the panel were anodized in an aqueous solution of sulfuric acid to cover them with a sulfuric acid oxidation layer. The thickness of this layer was 16 $\mu$m. Thus, a fluororesin-coated aluminum sheet was obtained (Invention sample 7-1).

Production of Invention sample 7-2

The panel prepared in the Example 7 was anodized to form an oxide layer having a thickness of 9 $\mu$m. The film surface of the resulting panel was masked with a polyethylene masking sheet having a thickness of 100 $\mu$ and thereafter the back and cut area of the resulting panel were coated with a transparent air-drying fluororesin coating material (a product of Asahi Glass Co., Ltd., Lumiflon #100) by spraying. The coating thickness was 10 $\mu$m. Thus a fluororesin-coated aluminum sheet was obtained (Invention sample 7-2).

Production of Invention sample 7-3

The same procedure as that of the Example 7 was repeated except that the anodizing of the panel was conducted in an aqueous solution of oxalic acid (not sulfuric acid). Thus, a fluororesin-coated aluminum sheet was obtained (Invention sample 7-3).

Product on of Invention sample 7-4

The same procedure as that of the Example 7 was repeated except that no print layer was formed on the resin film. Thus, a fluororesin-coated aluminum sheet was obtained (Invention sample 7-4).

The Invention samples 7-1 to 7-4 were examined for Taber's abrasion resistance, weathering resistance and bendability.

It can be understood from the results given in Table 4 that the Invention samples 7-1 to 7-4 are excellent in all of corrosion resistance according to CASS test, corrosion resistance of cut area, Taber's abrasion resistance, weathering resistance and bendability.

Table 4

| Ex. | CASS test RN | Corrosion resistance of cut area according to CASS test | Taber's abrasion resistance | Weathering resistance | Bendability |
|---|---|---|---|---|---|
| 7 - 1 | 10 | 0.5 | ◎ | ◎ | ◎ |
| 7 - 2 | 10 | 0 | ◎ | ◎ | ◎ |
| 7 - 3 | 10 | 0.5 | ◎ | ◎ | ◎ |
| 7 - 4 | 10 | 0.5 | ◎ | ◎ | ◎ |

Production of Invention sample 7-5

The same procedure as that of the Example 7 was repeated except that only the cut area of the panel was anodized in an aqueous solution of sulfuric acid as shown in Fig. 3. Thus, a fluororesin-coated aluminum sheet (Invention sample 7-5) was obtained. This sample was excellent in all of the above characteristics including weathering resistance.

Product on of Invention sample 7-6

The panel prepared in the Example 7 was bent. A stud bolt was joined to the resulting panel by stud welding in the conventional manner. The resulting panel was anodized in the same manner as that of the Example 7. Thus, a fluororesin-coated aluminum sheet was obtained (Invention sample 7-6). This sample was excellent in all of the above characteristics including weathering resistance.

Production of Invention sample 7-7

The same procedure as that of the Example 7 was repeated except that the laminate was cut into a piece having sizes of 50 mm × 50 mm. Thus, a fluororesin-coated aluminum sheet (Invention sample 7-7) was obtained. Then, a polyacrylic ester pressure-sensitive adhesive (Nissetsu PE-12) was applied to the anodized back of this sample to form a pressure-sensitive adhesive layer, followed by the covering of the layer with a release sheet (Serapiru BM-2, a product of Toyo Metallizing Co., Ltd.). Thus, a tile (with a pressure-sensitive adhesive) for forming outdoor wall was obtained. This tile was stuck on an outside wall and examined for the above characteristics including weathering resistance. This tile was excellent in all of the characteristics.

Production of Invention sample 7-8 and evaluation thereof

A transparent ETFE film having a thickness of 60 $\mu$m was fused to an aluminum sheet of A 3004 grade stipulated in JIS and having a thickness of 4 mm in the same manner as that of the Example 7. The obtained laminate was cut in given sizes with a panel saw, and an aluminum bolt (size: M8) was stud welded to the cut laminate to enable the joining of an aluminum frame as shown in Fig. 4 to the laminate. Thereafter, the resulting panel was anodized in an aqueous solution of sulfuric acid to form an oxide layer having a thickness of 16 $\mu$m thereon. Thus, an anticorrosive aluminum panel was obtained.

An aluminum frame shown in Fig. 4 was fixed to the anticorosive panel to form an aluminum cladding panel. The cladding panels thus produced were fixed on a wall substrate with a rubber packing and a fixing bolt upwardly from the foot of the wall. The jointing areas were sealed with a silicone sealant (a product of Toshiba Silicone Co., Ltd., grade 361).

The resulting work was subjected to the above weathering test, CASS test and Taber's abrasion resistance test. A good result (◎) was obtained in each test.

Production of Invention sample 7-9

The same procedure as that employed in the production of Invention sample 7-8 was repeated except that the thickness of the oxide layer was changed to 9 $\mu$m and the cut area was coated with an air-drying fluororesin coating material (a product of Asahi Glass Co., Ltd., Lumiflon #100, transparent) after the anodizing. The resulting work exhibited a good result (◎) in each of the weathering test, CASS test and Taber's abrasion resistance test. In Fig. 4, numeral 10 refers to an aluminum sheet covered with a fluororesin film fused thereto; 20 to an aluminum frame; 30 to a silicone sealant; 40 to a polyethylene foam back-up for sealing; 50 to a rubber packing; 60 to a silicone sealant; 70 to an M8 aluminum bolt; and 80 to a fixing bolt.

Production of Invention sample 7-10

An ETFE film having a thickness of 50 $\mu$m was fused onto the surface of an aluminum sheet A5052P stipulated in JIS and having a thickness of 2 mm and the obtained fluororesin-coated aluminum sheet was bent into a bent panel (1000 mm × 1500 mm) having a flange depth of 20 mm and a flange width of 20 mm. The bent panel was anodized in an aqueous solution of sulfuric acid to form an oxide layer. Then, this oxide layer was electrolytically pigmented with an alternating current in an electrolytic solution containing nickel sulfate, ammonium sulfate and boric acid under the condition of 0.3 A/dm$^2$. The resulting panel was subjected to sealing with boiling water to give an electrolytically pigmented aluminum panel.

Industrial Applicability

The present invention relates to a metal coated with a colored fluororesin. This coated metal is produced by heating a metal sheet and/or a fluroresin film in an atmosphere substantially free from oxygen and fusing them to each other, so that the metal sheet and the fluororesin film are scarcely deteriorated by oxidation, witch is believed to be a reason why the coated metal is excellent in the bond strength between the film and the metal sheet to withstand a prolonged service.

The metal sheet coated with a colored fluororesin according to the present invention can be used in various fields including interior and exterior cladding materials of buildings, billboard, shutter, covering materials for inside wall of tunnel and interior and exterior covering materials of automobile and train, thus making a great contribution to industrial fields.

The present invention also relates to a fluororesin-coated metal having a print layer. In this coated metal, the fluororesin film is firmly fused to the metal and therefore hardly peels off the metal, and the print layer is vividly colored and firm. Further, the print of characters or figures formed on the metal is clear and the print layer is firm and hardly peels off.

The fluororesin-coated aluminum according to the present invention is characterized by having, on the aluminum, a desired print layer which has not been affected adversely by fusing the resin film to the aluminum. In this print layer, any arbitrary pattern can be represented with a high precision.

The fluororesin-coated aluminum according to the present invention is extremely useful as building materials. Particularly, it can be favorably used, by virtue of its decorativeness, as cladding materials such as wall covering material, panel, coping and blind. Further, it can be preferably used as a kitchen utensil such as kitchen stove, a hood of bath or washstand or a member of automobile, train, bike, airplane, helicopter, ship or plant. It is needless to say that the use of the fluororesin-coated aluminum is not limited to those described above.

The fluororesin-coated metal having an oxide layer according to the present invention is excellent in weathering resistance, corrosion resistance (according to CASS test or of cut area), Taber's abrasion resistance, bendability and so on, so that it can be used as a material or member for forming outdoor walls.

## Claims

1. A fluororesin-coated metal comprising a metal sheet and a fluororesin layer formed on the metal sheet, characterized in that the fluororesin layer is one formed by fusing a colored fluororesin film containing a colorant onto the surface of the metal sheet.

2. A fluororesin-coated metal as set forth in claim 1, wherein the melting point of the fluororesin is 200°C or above and the content of the colorant in the fluororesin is 0.001 to 25 phr.

3. A fluororesin-coated metal as set forth in claim 1, wherein the fluororesin is a tetrafluoroethylene resin.

4. A fluororesin-coated metal as set forth in claim 1, wherein the fluororesin is a trifluoroethylene resin.

5. A fluororesin-coated metal as set forth in claim 1, wherein the fluororesin is a difluoroethylene resin.

6. A fluororesin-coated metal as set forth in claim 3, wherein the tetrafluoroethylene resin is an ethylene-tetrafluoroethylene copolymer (ETFE).

7. A fluororesin-coated metal as set forth in any of claims 1 to 6, wherein the colorant is a bright-color one, witch is contained in the fluororesin either in a state coated with a silicone resin or together with it.

8. A fluororesin-coated metal as set forth in any of claims 1 to 7, wherein the colorant is one selected from among zinc oxide (ZnO), titanium oxide ($TiO_2$), lithopone (ZiS + $BaSO_4$), zinc sulfide (ZnS), cadmium red (CdS + CdSe), antimony red ($2Sb_2S_3 \cdot Sb_2O_3$), Irgazin red, perylene red, iron oxide [$Fe_2O_3$ + (FeO)], chrome vermilion ($PbCrO_4 \cdot PbMoO_4 \cdot PbSO_4$), amber ($Fe_2O_3$ + $MnO_2$ + $Mn_3O_4$), chrome yellow ($PbCrO_4$), zinc yellow ($ZnCrO_4$), barium chromate ($BaCrO_4$), cadmium yellow (CdS), titanium yellow ($TiO_2 \cdot NiO \cdot Sb_2O_3$), ocher ($Fe_2O_3 \cdot SiO_2 \cdot Al_2O_3$), phthalocyanine, chrome green (iron blue + chrome yellow), cobalt green ($CoO \cdot Zno \cdot MgO$), cerulean blue ($CoO \cdot nSnO_2 \cdot mMgO$), ultramarine blue ($3NaAl \cdot SiO_4 \cdot Na_2S_2$), iron blue [$Fe_4[Fe(CN)_6]_3 \cdot nH_2O$], cobalt blue ($CoO \cdot nAl_2O_3$), cyanine blue, cobalt violet [$Co_3(PO_4)_2$], dioxazine violet, carbon black, iron black, aniline black and cyanine black.

9. A fluororesin-coated metal as set forth in claim 1, wherein the metal is an irony metal.

10. A fluororesin-coated metal as set forth in claim 1, wherein the metal is aluminum or an aluminum-base alloy.

11. A fluororesin-coated metal as set forth in claim 10, wherein the non-fluororesin-coated surface of the metal, at least the cut area thereof formed in working is covered with an oxide layer formed thereon by anodic or chemical oxidation.

12. A process for the production of a fluororesin-coated metal by laminating a metal sheet with a colored fluororesin film containing a colorant, characterized by heating at least either of the film and the metal sheet, press-bonding the resulting film and sheet to each other, and reheating the obtained laminate.

13. A process for the production of a fluororesin-coated metal as set forth in claim 12, wherein the reheating is conducted at a temperature ranging from the melting point (mp) of the fluororesin to the thermal decomposition temperature thereof.

14. A fluororesin-coated metal comprising a metal sheet and a fluororesin layer formed on the metal sheet, characterized in that a print layer composed of an ink composition is formed on the surface of a fluororesin film or a metal sheet, that the film is fused onto the metal surface, and that the ink composition comprises at least one member selected from among fluororesins and imide resins.

15. A fluororesin-coated metal as set forth in claim 14, wherein the fluororesin constituting the ink composition is one mainly comprising a carboxylated fluororesin.

16. A fluororesin-coated metal as set forth in claim 15, wherein the carboxylated fluororesin is one comprising a carboxylated vinyl ether as the constituent nonomer.

17. A fluororesin-coated metal as set forth in claim 14, wherein the pigment constituting the ink composition is a bright-color one, which is contained in the fluororesin or the imide resin either in a state coated with a silicone resin or together with it.

18. A fluororesin-coated metal as set forth in claim 14, wherein the print layer lies between the fluororesin film and the metal sheet.

19. A fluororesin-coated metal as set forth in claim 14 or 15, wherein the melt flow index of the ink composition is 1 to 500.

20. A fluororesin-coated metal as set forth in claim 14 to 15, wherein the melt flow index of the fluororesin film is 10 to 500 mm$^3$/sec.

21. A fluororesin-coated metal as set forth in claim 14 or 15, wherein the metal is aluminum or an aluminum-base alloy.

22. A fluororesin-coated metal as set forth in claim 21, which is produced by roughening one surface of an aluminum metal sheet into a rough surface having a center-line-average height (Ra) of 0.5 to 30.0 $\mu$m and a ten-point-average height (Rz) of 1.0 to 100 $\mu$m and fusing a fluororesin film onto the rough surface.

23. A fluororesin-coated metal as set forth in claim 21 or 22, characterized in that the non-fluororesin-coated surface of the metal, at least the cut area thereof formed in working is covered with an oxide layer formed thereon by anodic or chemical oxidation.

24. A fluororesin-coated metal characterized by being produced by roughening one surface of an aluminum metal sheet into a rough surface having a center-line-average height (Ra) of 0.5 to 30.0 $\mu$m and a ten-point-average height (Rz) of 1.0 to 100 $\mu$m, forming a print layer on the rough surface, and fusing a fluororesin film to the resulting aluminum metal sheet.

25. A fluororesin-coated metal as set forth in claim 24, characterized in that the ink composition forming the print layer comprises at least one member selected from among fluororesins and imide resins.

**26.** A fluororesin-coated metal as set forth in claim 24 or 25, wherein the melt flow index of the fluororesin film is 10 to 500 mm$^3$/sec.

**27.** A fluororesin-coated metal which is an aluminum or aluminum-base alloy sheet partially coated with a fluororesin or a work thereof, characterized in that the non-fluororesin-coated surface of the metal, at least the cut area thereof formed in working is covered with an oxide layer formed thereon by anodic or chemical oxidation.

**28.** A fluororesin-coated metal as set forth in claim 27, wherein the whole of the non-fluororesin-coated surface is covered with an oxide layer formed thereon by anodic or chemical oxidation.

**29.** A fluororesin-coated metal as set forth in claim 27, wherein the oxide layer is one formed by anodization with an aqueous solution of sulfuric acid.

**30.** A fluororesin-coated metal as set forth in claim 27, wherein the oxide layer is a colored one.

**31.** A fluororesin-coated metal as set forth in claim 27, wherein the fluororesin-coated surface of the metal is one produced by fusing a fluororesin film to an aluminum or aluminum-base alloy sheet.

**32.** A fluororesin-coated metal as set forth in claim 27, wherein the fluororesin film is one having a print layer.

**33.** A fluororesin-coated metal as set forth in claim 32, wherein the print layer lies between the fluororesin film and the surface of the metal.

**34.** A fluororesin-coated metal as set forth in claim 32 or 33, wherein the melt flow index of the ink composition forming the print layer is 1 to 500.

**35.** A fluororesin-coated metal as set forth in any of claims 32 to 34, wherein the ink composition forming the print layer mainly comprises a fluororesin.

**36.** A fluororesin-coated metal as set forth in any of claims 27 to 34, characterized in that the fluororesin layer is colored with a pigment or a dye.

**37.** A fluororesin-coated metal as set forth in claim 36, wherein the fluororesin layer is composed of an ethylene-tetrafluoroethylene copolymer resin (ETFE).

**38.** A fluororesin-coated metal as set forth in claim 27, characterized by being suitable for a wall-forming material or member.

Fig. 1

Fig. 5

Fig. 2

Fig. 3

Fig. 4

Fig. 6

(a)

(Ra=2.0)

(b)

(Ra=2.0)

(c)

(Ra=1.4)

# INTERNATIONAL SEARCH REPORT

International Application No  PCT/JP92/00416

## I. CLASSIFICATION OF SUBJECT MATTER (if several classification symbols apply, indicate all) ⁶

According to International Patent Classification (IPC) or to both National Classification and IPC

Int. Cl⁵  B32B15/08

## II. FIELDS SEARCHED

| Minimum Documentation Searched ⁷ | |
|---|---|
| Classification System | Classification Symbols |
| IPC | B32B15/08 |

Documentation Searched other than Minimum Documentation
to the Extent that such Documents are Included in the Fields Searched ⁸

| | | |
|---|---|---|
| Jitsuyo Shinan Koho | 1926 | - 1992 |
| Kokai Jitsuyo Shinan Koho | 1971 | - 1992 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 3-211051 (Sumitomo Electric Industries, Ltd.), September 13, 1991 (13. 09. 91), (Family: none) | 1-38 |
| Y | JP, A, 3-193444 (Kasei Naoetsu K.K.), August 23, 1991 (23. 08. 91), (Family: none) | 1-38 |
| Y | JP, A, 3-5139 (Nippon Carbide Industries Co., Inc.), January 10, 1991 (10. 01. 91), (Family: none) | 1-38 |
| Y | JP, A, 58-102725 (Sumitomo Aluminum Seiren K.K.), June 18, 1983 (18. 06. 83), (Family: none) | 1-38 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 9, 1992 (09. 06. 92) | June 30, 1992 (30. 06. 92) |
| International Searching Authority | Signature of Authorized Officer |
| Japanese Patent Office | |